# EUROPEAN PATENT SPECIFICATION

(11) **EP 3 125 542 B1**
(45) Date of publication and mention of the grant of the patent: **24.02.2021**
(21) Application number: 14887335.9
(22) Date of filing: 28.03.2014
(51) Int. Cl.: H04N 7/18

(54) **MONITORING SYSTEM AND MONITORING METHOD**
ÜBERWACHUNGSSYSTEM UND ÜBERWACHUNGSVERFAHREN
SYSTÈME DE SURVEILLANCE, ET PROCÉDÉ DE SURVEILLANCE

(43) Date of publication of application: 01.02.2017
(73) Proprietor: Hitachi Kokusai Electric Inc., Tokyo 101-8980 (JP)
(72) Inventor: ITO, Tetsuya, Kodaira-shi Tokyo 187-8511 (JP)
(74) Representative: Strehl Schübel-Hopf & Partner
(86) International application number: PCT/JP2014/059169
(87) International publication number: WO 2015/145736

(56) References cited:
- EP-A1- 2 290 979
- JP-A- H0 777 965
- JP-A- 2005 349 997
- JP-A- 2011 057 056
- JP-A- 2012 217 088
- JP-B2- 5 340 123

## Description

### Technical Field

The present invention relates to a monitor camera system, and more particularly, to a monitoring system installed in a railway vehicle such as a passenger-carrying vehicle, and a monitoring method for monitoring passengers who are getting on and off the vehicles.

### Background Art

The monitor camera system such as IP-based CCTV system includes at least the IP camera, the network constructed with LAN cable, the server (controller), and the monitor.

The IP camera of the IP-based monitor camera system is configured to capture video images in the predetermined visual field, and compress the captured video through H.264/MPEG4/JPEG for delivery to the network constructed with LAN cable. The server receives the delivered videos so as to be decompressed, and displays the decompressed videos on the monitor.

The server is capable of storing the received videos. It is also possible to use the terminal unit such as PC in place of the server, which receives and decompresses those videos via the network for display on the connected monitor. The monitor may be connected to the network, the server, or the terminal unit.

Instead of the server and the terminal unit such as PC, the monitor connected to the PC, or the monitor-integrated PC (hereinafter referred to as monitor PC) may be used to receive the videos via the network, and further stores and decompress the received videos so as to be displayed on the connected monitor.

The IP-based monitor camera system has advantages of allowing selection and switching of resolution and the frame rate of the video. Such advantages have never been derived from the analog monitor camera system such as the analog CCTV system. Use of the single cable allows transmission of a plurality of videos so as to simplify wiring of the cable.

The IP-based monitor camera system has been used for the system with narrow installation space, for example, the railway vehicle monitoring system (see Patent Literature 1).

### Citation List

### Patent Literature

PTL 1: JP-A-2011-119912

Further, EP 2290979 A1 discloses a monitoring system from which the precharacterising part of caim 1 starts out. Related art is disclosed in JP 5340123 B2.

### Summary of Invention

### Technical Problem

Recently, there may be often the case where only one crew has to carry out various jobs such as driving of the passenger-carrying vehicle, and safety confirmation upon departure from the station. As increase in the number of vehicles, visual confirmation of passengers who are getting on and off the train through the respective doors upon departure from the station may impose a heavy burden on the crew.

It is an object of the present invention to provide a monitoring system and a monitoring method which allow an operator to visually confirm the passengers upon opening and closing of the doors of the passenger-carrying vehicles at a time on the monitor installed in the vehicle in operation (generally, the leading vehicle), and to execute safe and efficient operation of the passenger-carrying vehicles.

### Solution to Problem

This object is achieved by monitoring systems and methods as set forth in the appended claims. In accordance with a first feature, the monitoring system is installed in a railway vehicle, in which a server, a monitor, a camera disposed on a vehicle constituting the railway vehicle at a position that ensures to capture an area around an entrance door of the vehicle, and a layer switch are connected with one another via a network. The server allows a video captured by the camera to be displayed on the monitor in accordance with operation information received by the server from a host server.

In the monitoring system as the second feature according to the first feature, the operation information contains entrance door information identifying a door opening side of the vehicle so that the video of the camera in association with the door opening side is displayed.

In the monitoring system as the third feature according to the first or the second feature, the operation information includes speed information indicating a traveling speed of the railway vehicle, and the entrance door information. In the case where the traveling speed is lower than a predetermined value, and the door is opened, the monitor displays the video of the camera. In the case where the travelling speed is equal to or higher than the predetermined value, or the door is closed, the monitor stops displaying the video.

In the monitoring system as the fourth feature according to any one of the first to the third features, trimming frame information is set with respect to the video acquired by the camera for each of the cameras, and the video to be displayed on the monitor is divided into sections as trimmed videos each derived from trimming a part of the video captured by the respective cameras based on the trimming frame information.

In the monitoring system as the fifth feature according to any one of the first to the fourth features, the server records the trimming frame information for the respective cameras. In the case where the operation information is under a predetermined condition, the server transmits the trimming frame information and camera information with respect to the video of the camera for display to the monitor. The monitor updates the received trimming frame information, and acquires the video from the respective cameras in accordance with the received camera information. Each of the videos is trimmed in accordance with the updated trimming frame information for displaying the trimmed video in the divided screens.

In the monitoring system as the sixth feature according to any one of the first to the fifth features, upon reception of additional coupling information from the host server, the server communicates with a server of the additionally coupled railway vehicle so that the server set as a main server acquires the trimming frame information from a sub-server to update the trimming frame information of the associated vehicle, and the updated trimming frame information is transmitted to the monitor.

A monitoring method as the seventh feature according to the present invention is provided for a monitoring system installed in a railway vehicle, in which a server, a monitor, a camera disposed on a vehicle constituting the railway vehicle at a position that ensures to capture an area around an entrance door of the vehicle, and a layer switch are connected with one another via a network. The server allows a video captured by the camera to be displayed on the monitor in accordance with operation information received by the server from a host server.

In the monitoring method as the eighth feature according to the seventh feature, the operation information contains entrance door information identifying a door opening side of the vehicle so that the video of the camera in association with the door opening side is displayed.

In the monitoring method as the ninth feature according to the seventh or the eighth feature, the operation information includes speed information indicating a traveling speed of the railway vehicle, and the entrance door information. In the case where the traveling speed is lower than a predetermined value, and the door is opened, the monitor displays the video of the camera. In the case where the travelling speed is equal to or higher than the predetermined value, or the door is closed, the monitor stops displaying the video.

In the monitoring method as the tenth feature according to any one of the seventh to the ninth features, trimming frame information is set with respect to the video acquired by the camera for each of the cameras, and the video to be displayed on the monitor is divided into sections as trimmed videos each derived from trimming a part of the video captured by the respective cameras based on the trimming frame information.

In the monitoring method as the eleventh feature according to any one of the seventh to the tenth features, the server records the trimming frame information for the respective cameras. In the case where the operation information is under a predetermined condition, the server transmits the trimming frame information and camera information with respect to the video of the camera for display to the monitor. The monitor updates the received trimming frame information, and acquires the video from the respective cameras in accordance with the received camera information. Each of the videos is trimmed in accordance with the updated trimming frame information for displaying the trimmed video in divided screens.

In the monitoring method as the twelfth feature according to any one of the seventh to the eleventh features, upon reception of additional coupling information from the host server, the server communicates with a server of the additionally coupled railway vehicle so that the server set as a main server acquires the trimming frame information from a sub-server to update the trimming frame information of the associated vehicle, and the updated trimming frame information is transmitted to the monitor.

### Advantageous Effects of Invention

The present invention provides the monitoring system and the monitoring method which allow the driver or the crew to visually confirm passengers who are going to get in or out through opening or closing doors of the passenger-carrying vehicles at a time on the monitor installed in the leading vehicle or the rearmost vehicle so as to execute further safe and efficient operation of the passenger-carrying vehicle.

### Brief Description of Drawings

Fig. 1 is a schematic system layout for explaining an embodiment of the monitoring system according to the present invention.
Fig. 2A is a block diagram for explaining the embodiment of the monitoring system structure according to the present invention.
Fig. 2B is a block diagram for explaining an embodiment of the monitoring system structure according to the present invention.
Fig. 2C is a block diagram for explaining an embodiment of the monitoring system structure according to the present invention.
Fig. 3A is an explanatory view of an embodiment showing a position of a monitor camera of the monitoring system according to the present invention.
Fig. 3B is an explanatory view of an embodiment showing positions of the monitor cameras of the monitoring system according to the present invention.
Fig. 3C is an explanatory view of an embodiment showing positions of the monitor cameras of the monitoring system according to the present invention.
Fig. 3D is an explanatory view of an embodiment showing positions of the monitor cameras of the monitoring system according to the present invention.
Fig. 4A is an explanatory view of an embodiment of a screen displayed on a monitor PC in the monitoring system according to the present invention.
Fig. 4B is an explanatory view of an embodiment of a screen displayed on the monitor PC in the monitoring system according to the present invention.
Fig. 4C is an explanatory view of an embodiment of a screen displayed on the monitor PC in the monitoring system according to the present invention.
Fig. 5A is an explanatory view of an embodiment of a screen displayed on the monitor PC in the monitoring system according to the present invention.
Fig. 5B is an explanatory view of a video trimming (frame) region in the monitoring system according to the present invention.
Fig. 6A is an explanatory view of an embodiment of a screen for setting the video trimming region in the monitoring system according to the present invention.
Fig. 6B is a flowchart for explaining an embodiment for setting the video trimming region in the monitoring system according to the present invention.
Fig. 6C is an explanatory view of an embodiment of a screen for setting the video trimming region in the monitoring system according to the present invention.
Fig. 7A is a flowchart for explaining an embodiment of a system operation in the monitoring system according to the present invention.
Fig. 7B is a flowchart for explaining an embodiment of a system operation in the monitoring system according to the present invention.
Fig. 8 is a flowchart for explaining an embodiment of a system operation in the monitoring system according to the present invention.
Fig. 9A is a schematic system layout for explaining an outline of an embodiment of the monitoring system according to the present invention.
Fig. 9B is a schematic system layout for explaining an outline of an embodiment of the monitoring system according to the present invention.
Fig. 10 is a block diagram for explaining an embodiment of the monitoring system structure according to the present invention.
Fig. 11 is a timing chart for explaining an embodiment of system operation upon additional coupling in the monitoring system according to the present invention.
Fig. 12 is a timing chart for explaining an embodiment of system operation upon additional coupling in the monitoring system according to the present invention.

### Description of Embodiment

Embodiments of the present invention will be described in detail referring to the drawings.

The drawings representing the embodiments of the present invention are used only for easy understanding of the present invention. The use of those drawings is not intended to limit the present invention to those embodiments.

The component with the same function will be designated with the same reference numeral in the respective explanations of the drawings, the details of which will be omitted as much as possible for avoiding unnecessary duplication.

### First Embodiment

A first embodiment according to the present invention will be described referring to the drawings.

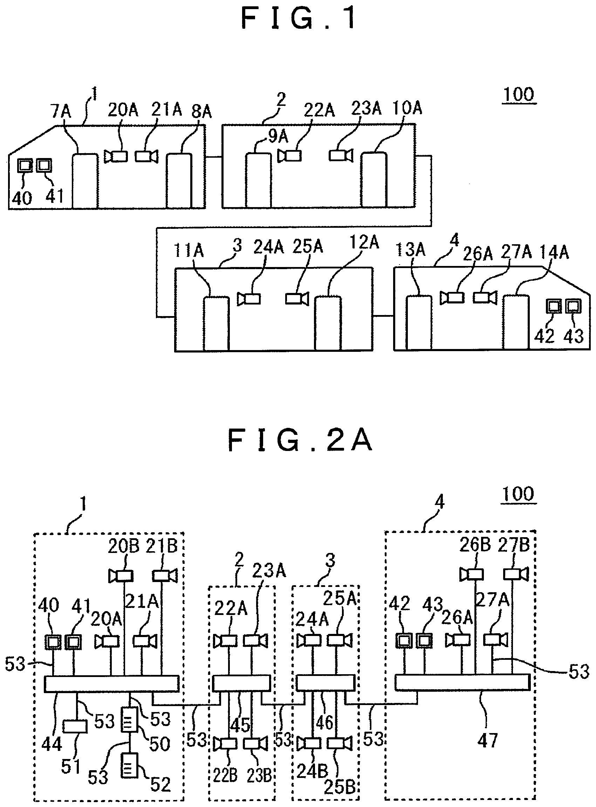

Fig. 1 is a schematic system layout for explaining an embodiment of a monitoring system according to the present invention. Fig. 1 shows the layout example of a railway monitoring system installed in the single train set, by which the area around the doorway (door) is monitored from the inside of the train.

Referring to Fig. 1, the train includes four vehicles, that is, a leading vehicle 1, intermediate vehicles 2, 3, and a rearmost vehicle 4. A railway monitoring system 100 is installed in the vehicle of the train. Fig. 1 does not represent all the structures of the monitoring system. The detailed explanation with respect to the monitoring system structure will be made referring to Fig. 2A. The explanation will be made on the assumption that the traveling direction of the train is set as the one of the vehicle 1 as the leading vehicle. Referring to Fig. 1, the near side of the train is set to A, and the far side (not shown) is set to B. In this embodiment, the left and right sides with respect to the traveling direction are set to A and B, respectively.

Each vehicle includes two groups of front and rear doors 7A to 14A, and 7B to 14B at both sides, respectively. Passengers are supposed to get on and off through opening doors either at the left side or the right side, or at both sides of the vehicle stopped at the station platform. Monitor cameras 20A to 27A, and 20B to 27B are disposed around the respective doors 7A to 14A, and 7B to 14B correspondingly for monitoring the getting-on/off state. IP cameras are used for all those monitor cameras 20A to 27A, and 20B to 27B as shown in Fig. 1. Fig. 1 shows only the doors at the left side among those at both sides of the vehicle, and the monitor cameras in association with those doors at the left side without showing the doors and the associated monitor cameras at the other side (right side) . Any other structures besides the monitor cameras are common regardless of the doors either at the left side or right side.

Monitor PCs 40, 41 for monitoring are installed in the leading vehicle 1, and monitor PCs 42, 43 for monitoring are also installed in the rearmost vehicle 4. The driver is allowed to confirm videos captured by the monitor cameras 20A to 27A on the monitor PC 40 or both the monitor PCs 40, 41, or the monitor PC 42 or both the monitor PCs 42, 43.

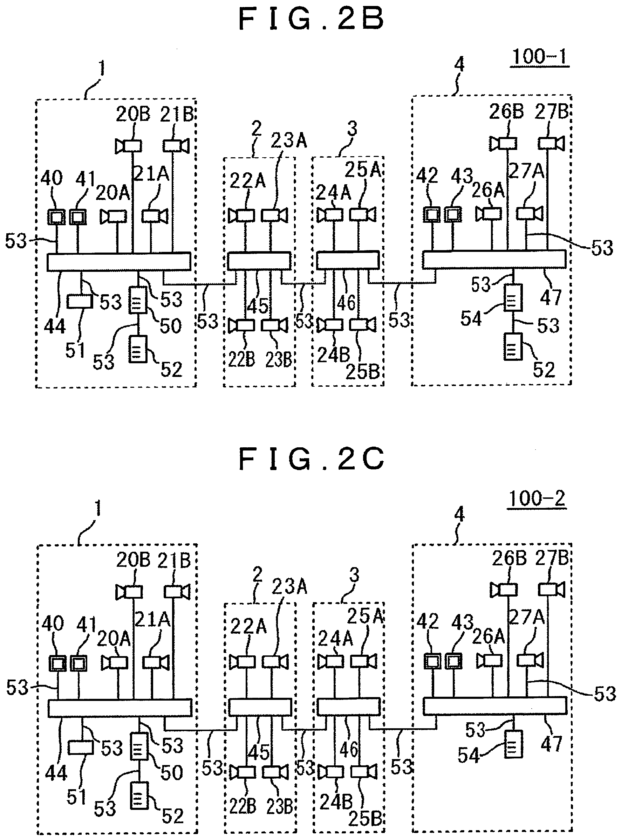

Fig. 2A is a block diagram for explaining an embodiment of the structure of the monitoring system 100 as shown in Fig. 1. In comparison with Fig. 1 for mainly explaining installation and arrangement of the monitoring system 100 in the train, Fig. 2 is a view for explaining connection among the respective components that constitute the monitoring system 100.

Frames each enclosed with the broken line represent the vehicles 1 to 4 as shown in Fig. 1. All components that constitute the monitoring system 100 are connected with the network cable.

Likewise Fig. 1, Fig. 2A shows only the doors at the left side among those at both sides of the vehicle, and the monitor cameras in association with those doors at the left side without showing the doors and the associated monitor cameras at the other side. Any other structures are common regardless of the doors either at the left side or right side.

As Figs. 1 and 2A show, the monitoring system 100 according to the present invention is installed in the train having the vehicles 1 to 4 coupled. The monitoring system 100 includes the monitor cameras 20A to 27A, the monitor PCs 40 to 43, L2-SWs (layer-2 switches) 44 to 47, a server 50, a video recorder 51, a host server 52, the network cable 53, and a not shown power supply cable. The power supply cable supplies power from power supply sections (not shown) of the vehicles 1 to 4 to the respective components.

Referring to Figs. 1 and 2A, two monitor PCs 40, 41 or 42, 43 are arranged separately. Preferably, the monitor PCs 40, 41 or 42, 43 are disposed while being vertically stacked, or horizontally arranged so that the driver (crew) is capable of observing screens of both monitor PCs simultaneously.

The leading vehicle 1 includes the server (controller) 50, the video recorder 51, the host server 52, the monitor cameras 20A, 21A, 20B, 21B, the monitor PCs 40, 41, and the L2-SW 44. The server 50, the video recorder 51, the monitor PCs 40, 41, and the monitor cameras 20A, 21A, 20B, 21B are connected to the L2-SW 44 with the network cable 53. The host server 52 is connected to the server 50 with the network cable 53. The L2-SW 44 is connected to an L2-SW 45 installed in the subsequent vehicle 2 with the network cable 53.

The rearmost vehicle 4 includes the monitor cameras 26A, 27A, 26B, 27B, the monitor PCs 42, 43, and an L2-SW 47. The monitor cameras 26A, 27A, 26B, 27B, and the monitor PCs 42, 43 are connected to the L2-SW 47 with the network cable 53, respectively. The L2-SW 47 is connected to an L2-SW 46 installed in the preceding vehicle 3 with the network cable 53.

The host server 52 serves to manage operations of the train as the TMS (Train Management System), for example. The host server 52 outputs the train operation information to the server 50 at a given cycle during the train operation. The train operation information includes at least the train speed information, doorway opening/closing information (information indicating whether the entrance door is opened or closed), the information on the entrance door of the vehicle at the next stop, or the station platform at which the train is currently stopped (for example, information indicating that the entrance door is either at the left side or the right side), and the number of vehicles.

The intermediate vehicle 2 includes the monitor cameras 22A, 23A, 22B, 23B, and the L2-SW 45. The L2-SW 45 is connected to the L2-SW 44 installed in the preceding vehicle 1, and the L2-SW 46 installed in the subsequent vehicle 3 with the network cable, respectively. The vehicle 3 includes the monitor cameras 24A, 25A, 24B, 25B, and the L2-SW 46 likewise the vehicle 2. The L2-SW 46 is connected to the L2-SW 45 installed in the preceding vehicle 2, and to the L2-SW 47 installed in the subsequent vehicle 4 with the network cable 53, respectively.

The leading vehicle 1 and the intermediate vehicle 2, the intermediate vehicles 2 and 3, and the intermediate vehicle 3 and the rearmost vehicle 4 construct the single network in the train by connecting the L2-SWs installed in the adjacent vehicles with the network cable 53.

The network cable 53 is connected to the junction box (not shown) via the vehicle floor so as to couple the vehicles by connecting the junction boxes of the adjacent vehicles by using the jumper wire (not shown).

The monitoring system 100 as shown in Figs. 1 and 2A is configured to be used by a driver alone in the leading vehicle 1 for train control (operation, opening and closing of the entrance door).

All the monitor cameras 20A to 27A, 20B to 27B are operated to capture videos in the predetermined visual fields each at the predetermined capture frame rate. The monitor cameras 20A to 27A and/or 20B to 27B compress the captured videos (live video) with H.264/MPEG4/JPEG, and transmit the data to the video recorder 51 and the monitor PCs 40 to 43 via the L2-SWs and the network cable.

The video recorder 51 constantly records the input videos while correlating the monitor camera that has captured the video with the clock time of capturing. In response to instruction of the server 50, the monitor PCs 40 to 43 execute the image processing such as expansion and trimming of the live videos and recorded videos captured by all the monitor cameras 20A to 27A, 20B to 27B, and display those videos on the screen. The recorded videos will be used for analytical materials and evidence video images mainly in the case of accidents and criminal occurrence. The operator will perform main setting for the server 50, the monitor PCs 40 to 43, the monitor cameras 20A to 27A, 20B to 27B, and the video recorder 51 preliminarily upon start of the system operation.

The monitor cameras 20A to 27A and/or 20B to 27B transmit videos to the video recorder 51 and the monitor PCs 40 to 43 at the predetermined transmission frame rate. Alternatively, the monitor cameras 20A to 27A and/or 20B to 27B transmit the videos to the video recorder 51 and the monitor PCs 40 to 43 at the predetermined transmission frame rate in response to the transmission request sent from the monitor PCs 40 to 43 via the L2-SWs.

Upon start of the system operation, the operator is allowed to preliminarily set whether the videos captured by the monitor cameras 20A to 27A, and 20B to 27B are transmitted automatically at the predetermined frame rate, or transmitted in response to the transmission request from the monitor PCs 40 to 43. It is also possible for the driver to switch the video transmission by operating the server 50.

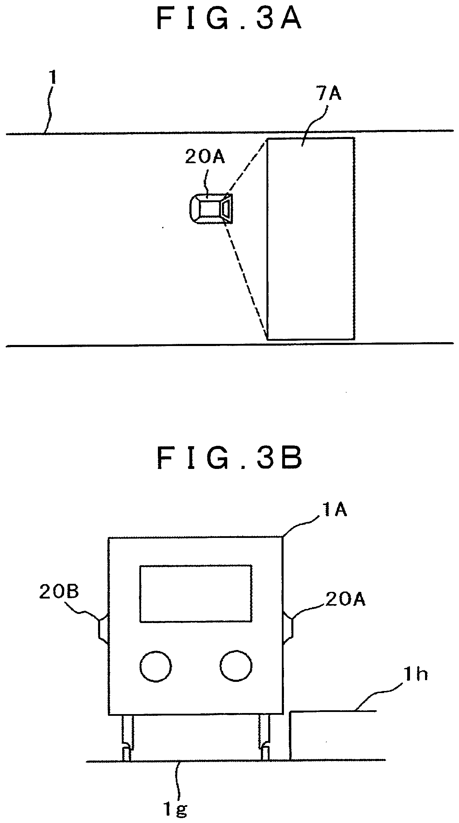

Figs. 3A, 3B, 4A, and 5A are explanatory views representing an embodiment of the monitor screen displayed on the monitor PC 40 of the monitoring system 100 according to the first embodiment of the present invention.

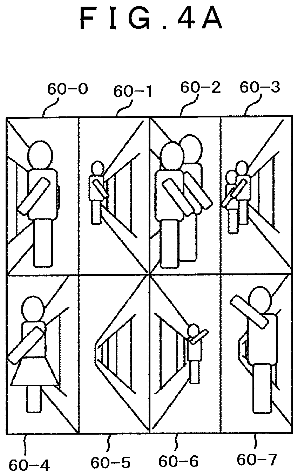

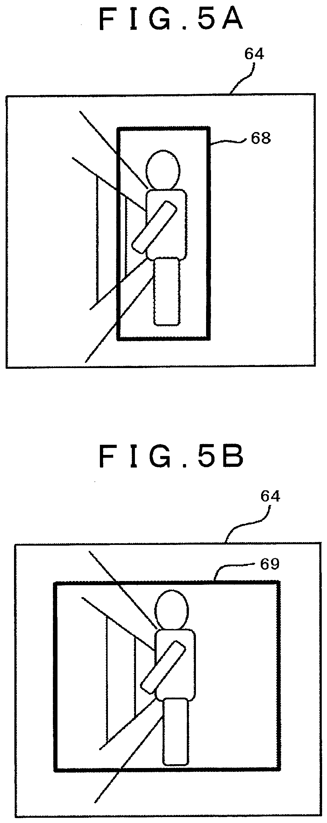

Referring to Figs. 1 and 2A, the monitoring system 100 is required to display the videos (videos captured by the monitor cameras 20A to 27A in the embodiment) of areas around all the doorways (around the doors) which need monitoring upon getting on/off of passengers in a stop state of the train at the station on the monitor PC 40 of the leading vehicle 1 where the driver is on board. Monitoring of the doorway as the area around the opening and closing door at the platform side is required. As there are 8 doors at one side required for monitoring (see Figs. 1, 2A, or 3A), the video is divided into 8 sections to be displayed on the monitor PC as Fig. 4A shows. Each section is trimmed from the video captured by the monitor cameras into necessary rectangular regions for display (see trimming frame 68 of Fig. 5A). The rectangular region required for trimming display may be preliminarily determined (which will be described in detail later).

In the case of the generally employed monitor camera of stationary type, the visual field range may differ depending on the respective monitor cameras, thus failing to have the same setting. In the generally employed case, the visual field range (angle of view) is individually adjusted upon setting of the monitor camera so as to allow capture of the predetermined region. On the contrary, this embodiment is configured to set so that the visual field range of the monitor camera to be disposed becomes larger than the required capture region, and to trim the predetermined video region (rectangular region required for trimmed display) from the video captured by the corresponding monitor camera.

Referring to Fig. 4A, a screen area 60-0 displays the video captured by the monitor camera 20A installed in the leading vehicle 1. A screen area 60-1 displays the video captured by the monitor camera 21A installed in the leading vehicle 1. Likewise, a screen area 60-2 displays the video captured by the monitor camera 22A installed in the vehicle 2. A screen area 60-3 displays the video captured by the monitor camera 23A installed in the vehicle 2. A screen area 60-4 displays the image captured by the monitor camera 24A installed in the vehicle 3. A screen area 60-5 displays the video captured by the monitor camera 25A installed in the vehicle 3. A screen area 60-6 displays the video captured by the monitor camera 26A installed in the rearmost vehicle 4. A screen area 60-7 displays the video captured by the monitor camera 27A installed in the rearmost vehicle 4.

Figs. 3A and 3B are explanatory views showing an example of a monitor camera set position according to the first embodiment. Fig. 3A is a side view of the area around a door 7A for entrance of the vehicle 1 of the train when seen from a platform 1h on the assumption that the train travels leftward. Fig. 3B is a front view of the vehicle 1 when seen from the travelling direction.

Referring to Fig. 3A, the monitor camera 20A is disposed on an outer wall of the vehicle 1 around the door 7A at the side in the traveling direction on a railroad track 1g, and the visual field for capture (angle of view) is set so that the area around the door 7A is captured. Referring to Fig. 3B, the monitor camera 20B is also disposed on the opposite side. The embodiment as shown in Figs. 3A and 3B is configured to allow the monitor cameras 20A and 20B to capture the areas around the doors from the front side in the traveling direction. However, it is also possible to dispose the monitor cameras 20A and 20B so as to capture the areas around the doors from the rear side in the traveling direction.

Fig. 5A is an explanatory view of an embodiment of the screen displayed on the monitor PC of the monitoring system according to the present invention. Fig. 5A represents an example of the video captured by the monitor camera 20A, which is displayed in the screen area 60-0 as shown in Fig. 4A.

The monitor camera 20A takes the predetermined capture visual field to acquire a video 64, and transmits the video to the monitor PC 40 via the network in the train. The monitor PC 40 trims the video in the predetermined trimming frame 68, and displays the trimmed video in the screen area 60-0 as shown in Fig. 4A.

In this way, the embodiment of the monitoring system according to the present invention is configured to trim the video captured by the monitor camera in the trimming frame preliminarily set for the respective monitor cameras, and to display the trimmed image in the screen area assigned to the divided screen on the monitor PC.

Trimming of the video through the process in each of the respective monitor cameras for transmission of the trimmed video to the monitor PC may reduce the load exerted to the network although the load to the monitor camera is slightly increased.

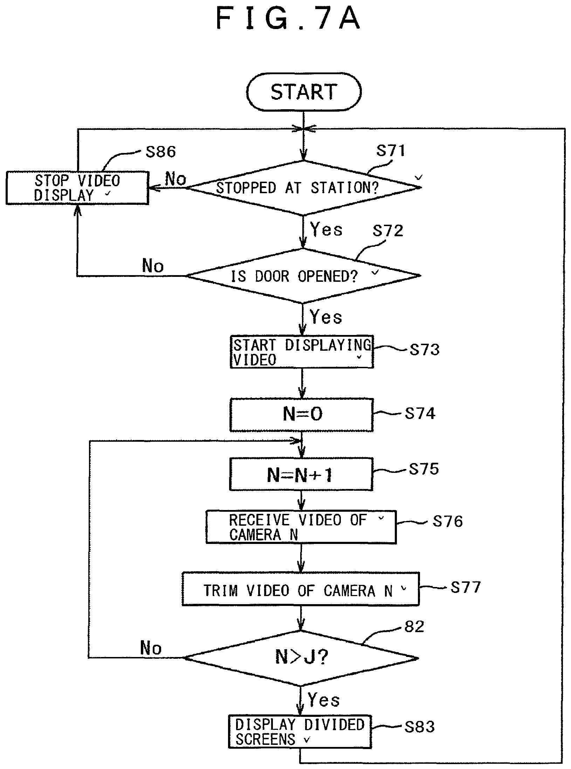

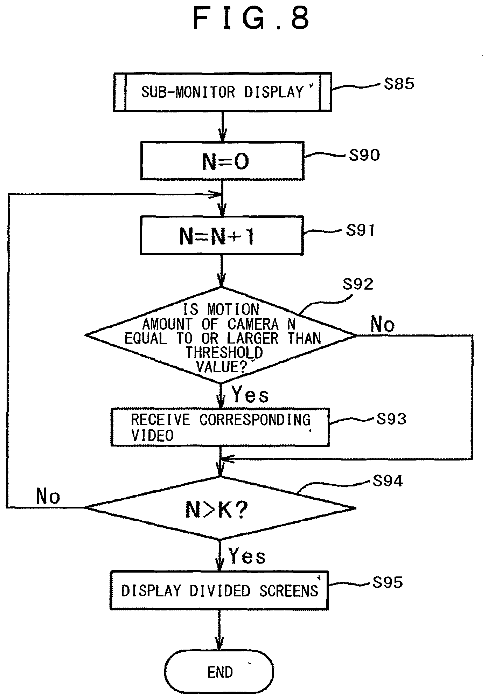

Operations of the monitoring system according to the first embodiment will be described referring to flowcharts of Figs. 7A and 8.

IDs from ID1 to ID16 are assigned to the monitor cameras 20A to 27A, and 20B to 27B as shown in Fig. 2A, respectively, based on which start or stop of the video distribution operation is controlled via the network. The monitor camera assigned with the IDN will be referred to as the monitor camera N (N is an integer equal to or larger than 1).

The monitor PCs 40, 41 acquire the trimming frame information and the divided screen information of the respective monitor cameras from the server 50 upon start of the train operation so that such data are recorded.

The monitor PCs 40, 41 hold the information indicating the number of divided screens, and arrangement of the divided screens (correlation between the divided regions (see Fig. 4A) and the videos captured by the specific monitor cameras) for both cases where the door is at the left and right sides.

For example, if the division number is 8, the 8 divided screens will be displayed on the monitor PC 40. If the division number exceeds 8, for example, the division number is 16, the divided screens of the videos 1 to 8 are displayed on the monitor PC 40, and the divided screens of the videos 9 to 16 are displayed on the monitor PC 41.

In stop determination step S71, the server 50 determines whether the received speed is equal to or higher, or lower than the predetermined speed based on the train speed information among the operation information received from the host server 52 for monitoring if the train with the monitoring system 100 has been stopped at the station. The predetermined speed used for the speed information is set to 3 km/h in this embodiment. However, such speed is not limited to the value as described above so long as the speed allows judgement whether the train is in the stop state.

Based on the operation information transmitted from the host server 52, if the train is in the stop state at the station, the server 50 proceeds the process to door opening/closing determination step S72. Based on the operation information transmitted from the host server 52, if the train is not in the stop state at the station, the server 50 proceeds to the process in video display stop step S86. For example, in the case where the train is stopped at the place other than the station owing to emergency stop, the stop determination step S71 is released based on the driver's judgement or emergency stop information from the host server 52 so that the operation shown in Fig. 7A is interrupted until the train starts travelling.

In the video display stop step S86, the process returns to the stop determination step S71 after transmitting the command to the monitor PC 40 for stopping the video display or suspending transmission of the command for the video display.

In the door opening/closing determination step, the server 50 determines whether the entrance door is opened, and which side the door is opened based on the entrance door opening/closing information and entrance door information among the received operation information data. If the entrance door is opened, the process proceeds to video display start step S73. If the entrance door is not opened, the process proceeds to the video display stop step S86.

In the video display start step S73, the server 50 transmits the command to start video display to the monitor PC 40 as well as the entrance door information on the corresponding station among the operation information data simultaneously or sequentially.

In initializing step S74, the monitor PC 40 initializes the variable N indicating the monitor camera ID (N = 0), and selects the video information to be displayed on the monitor PC from such information data as the number of divided screens and the divided screen arrangement which are stored in the monitor PC 40 or both the monitor PCs 40, 41 based on the received entrance door information. In the case of the structure as shown in Fig. 2A, the door at the left side is the entrance door. As a result, videos in the trimming frame regions, which have been captured by the monitor cameras 20A to 27A will be selected as the video information displayed in the screen areas 60-1 to 60-7 on the monitor PC 40 (see Fig. 4A).

In increment step S75, the variable N for designating the camera number is incremented (N = N + 1).

In video reception step S76, the monitor PC 40 receives the video of the monitor camera with ID designated as N (hereinafter referred to as the monitor camera N). In this case, the monitor PC 40 transmits the transmission request signal to the monitor camera N. The monitor camera N which has received the transmission request transmits the captured live video to the monitor PC 40. The monitor PC 40 receives the video.

In video trimming step S77, the monitor PC 40 trims the video of the monitor camera N which has been received in the region indicated by the trimming frame 68 as shown in Fig. 5A.

In process end determination step S82, the monitor PC 40 confirms the value of the variable N. If the variable N is smaller than J, the process returns to the increment step S75 for receiving the next monitor camera image. If the variable N is equal to or larger than J, the process proceeds to the divided screen display step S83. The value J denotes the number of the monitor cameras (in this embodiment, J = 8) which capture the area around the door at one side of the train. The value J is derived from identifying the target monitor camera from the intra-formation device information managed by the server.

In divided screen display step S83, the monitor PC 40 generates 8 divided screens from the trimmed video for display.

The process returns to the stop determination step S71 for executing the process steps repeatedly.

The first embodiment according to the present invention allows the driver or the crew to visually confirm passengers in association with opening/closing of doors of the passenger-carrying vehicle at a time on the monitor installed in the leading vehicle or in the rearmost vehicle. This makes it possible to provide the monitoring system and the monitoring method which ensure to operate the passenger-carrying vehicles further safely and efficiently.

In the embodiment, the server 50, the video recorder 51, and the host server 52 are installed in the leading vehicle. However, they may be provided for the L2-SW of the rearmost vehicle, or the intermediate vehicle.

### Second Embodiment

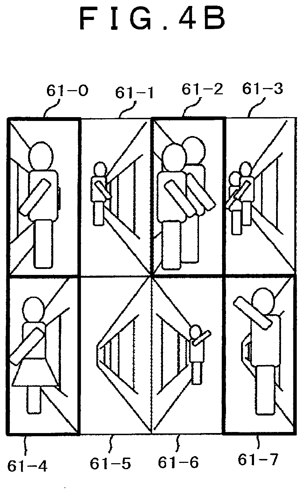

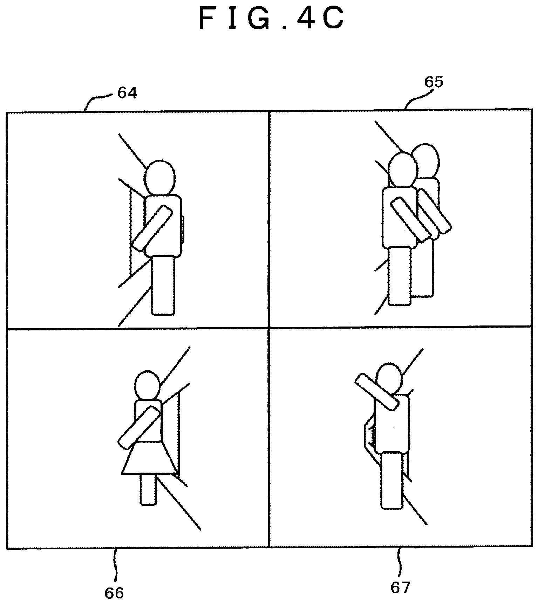

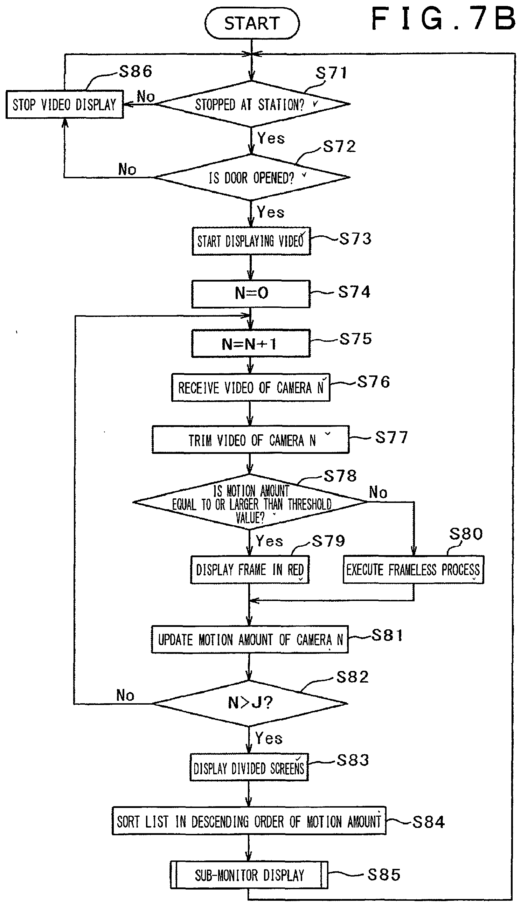

A second embodiment according to the present invention will be described referring to the drawings. The second embodiment is configured to implement the system operation as shown in Fig. 7B instead of the one according to the first embodiment as shown in Fig. 7A. The embodiment will be described referring to Figs. 4B and 4C instead of Fig. 4A. The embodiment will be further described referring to Figs. 5B and 8. Description of any other embodiment will be omitted.

In the first embodiment, 8 divided video sections are displayed in the screen areas (screen areas 60-0 to 60-7) on the single monitor, giving the impression of too many screens. Such display may make it difficult for the driver to identify the door around which the passengers are getting on or off the train.

The monitoring system according to the second embodiment is configured to allow the monitor PC 40 to detect motion in the video on the screen indicating the area around the respective doors. The motion amount of the video may be calculated by the motion detection. If the motion amount is equal to or higher than the predetermined level, display of the frames in the corresponding screen areas such as 61-0, 61-2, 61-4, 61-7 will be switched to the highlighted display as Fig. 4B shows. Referring to Fig. 4B, the subject frame is colored so as to be distinguished from the other video frame, and the frame line is made thick. Alternatively, it is also possible to color the other screen areas 61-1, 61-3, 61-4, 61-5, and 61-6 in the inconspicuous color such as gray. It is also possible to combine the display modes as described above.

In the timing just as the train is about to leave, the above-described switching operation for the display allows the driver to monitor the state of the specific entrance door for a short period of time from the 8 divided screens on the monitor PC.

The aforementioned operator is allowed to easily distinguish between the video which contains no passengers and the one which contains passengers, thus reducing the load of the video monitoring work.

The motion detection region is preliminarily designated with the rectangular range in the video region as indicated by a detection range 69 shown in Fig. 5B to be described later.

More preferably, besides the monitor PC 40 for displaying the 8 divided screens for viewing, the video with more motion amount is displayed on the other monitor PC 41. As Fig. 4C shows, the maximum number of divided screens is set to 4 to be displayed on the monitor PC 41 so that the screens are displayed in descending order of the motion amount. In this case, the video will be displayed without executing the trimming process as described referring to the screen area 64 of Fig. 5B. The screen areas 64 to 67 as shown in Fig. 4C correspond to the videos displayed in the screen areas 60-0, 60-2, 60-4 and 60-7 which have been trimmed as shown in Fig. 4A.

The monitor camera 20 captures the video in the predetermined capture visual field to acquire the video as shown in Fig. 4B, and transmits the video to the monitor PC 40 via the network in the train. The monitor PC 40 trims the video from the preset trimming frame 68, and displays the video in the screen area 61-0 as shown in Fig. 4B.

In the embodiment of the monitoring system according to the present invention, the video captured by the monitor camera is trimmed in accordance with the trimming frame preset for the respective monitor cameras so as to be displayed in the respective screen areas assigned to the divided screens on the monitor PC.

Fig. 5B is an explanatory view of an embodiment of the screen displayed on the monitor PC of the monitoring system according to the present invention. Fig. 5A shows an example of the video captured by the monitor camera 20A as described above, displaying the video in the screen area 61-0 as shown in Fig. 4B, and in the screen area 64 as shown in Fig. 4C.

Referring to Fig. 5B, the monitor PC 40 detects the motion in the video of the detection region 69 in the screen area 64. The motion amount in the video is calculated by the motion detection. If the motion amount is equal to or higher than the predetermined level, the display mode for the relevant frame is switched to the highlight display as indicated by the screen area 61-0 of Fig. 4B.

Operations of the monitoring system according to the second embodiment will be described referring to flowcharts of Figs. 7B and 8.

Explanations of the same steps in the drawings as those of the first embodiment will be omitted.

After execution of video trimming step S77, the monitor PC 40 calculates the motion amount of the video in the region as indicated by the detected region 69 of Fig. 5B in motion amount determination step S78. If the motion amount is larger than the preliminarily designated threshold value, the monitor PC 40 proceeds to frame highlighting step S79. If the motion amount is smaller than the preliminarily designated threshold value, the monitor PC 40 proceeds to frame non-highlighting step S80.

In the frame highlighting step S79, the monitor PC 40 displays the frame for the video with the motion amount larger than the preliminarily designated threshold value in red (highlighted) as indicated by the screen areas 61-0, 61-2, 61-4, and 61-7 of Fig. 4B.

In the frame non-highlighting step S79, the monitor PC 40 displays the frame for the video with the motion amount smaller than the preliminarily designated threshold value with no highlighting (red frame) as indicated by the screen areas 61-1, 61-3, 61-5, and 61-6 of Fig. 4B.

After execution of the frame highlighting step S79 or the frame non-highlighting step S80, the process proceeds to motion amount updating step S81.

In the motion amount updating step S81, the monitor PC 40 updates the motion amount information of the monitor camera N.

In the process end determination step S82, the monitor PC 40 confirms the value of the variable N. If the variable N is smaller than J, the process returns to the increment step S75 where the video of the next monitor camera is received. If the variable N is equal to or larger than J, the process proceeds to the divided screen display step S83. The value J denotes the number of the monitor cameras (in this embodiment, J = 8) for capturing areas around the doors at one side of the train.

Thereafter, the process in the divided screen display step S83 is executed, and the process further proceeds to rearrangement step S84.

In the rearrangement step S84, the monitor PC 40 rearranges the divided screens in the descending order of the motion amount from the motion amount information with respect to the 8 monitor cameras 20A to 27A, and notifies the monitor PC 41 of the list of rearranged order.

Then in sub-monitor display step S85, the monitor PC 41 selects videos of the four monitor cameras in the descending order of motion amount as notified in the rearrangement step S84, and rearranges the videos accordingly for display (see Fig. 4C). Referring to Fig. 4C, the videos are rearranged in the descending order of motion amount, that is, those of the monitor cameras 20A (screen area 64), 22A (screen area 65), 24A (screen area 66), and 27A (screen area 67).

Execution of the process in the sub-monitor display step S85 will be described referring to Fig. 8.

Referring to Fig. 8, in initialization step S90, the variable N indicating the order of the motion amount list is initialized to zero.

Then in increment step S91, the variable N is incremented (N = N + 1) .

In motion amount determination step S92, the monitor PC 41 determines whether or not the notified motion amount of the monitor camera N is larger than the designated threshold value. If the motion amount is larger than the threshold value, the process proceeds to video reception step S93. If the motion amount is smaller than the threshold value, the process proceeds to process end determination step S94.

In the video reception step S93, the corresponding video is received. That is, the monitor PC 41 transmits the video transmission request to the monitor camera N, and receives the video transmitted from the monitor camera N in response to the transmission request.

In the process end determination step S94, the monitor PC 41 determines whether or not the variable N is larger than the value K (K: maximum number of divisions for display, in this embodiment, K = 4). If the variable N is smaller than K, the monitor PC 41 executes the process in the increment step S91. If the variable N is equal to or larger than K, the monitor PC 41 generates K divided regions (in this case, 4 divided screens) so as to display the videos of the maximum number of K monitor cameras. The video for the divided screen is not derived from trimming in accordance with the trimming frame 68 in the screen area 64 as shown in Fig. 5A. The received video which is directly divided into four divided screens will be displayed (see Fig. 4C).

The second embodiment according to the present invention allows the driver or the crew to visually confirm passengers in association with opening/closing of doors of the passenger-carrying vehicle at a time on the monitor installed in the leading vehicle or in the rearmost vehicle. This makes it possible to provide the monitoring system and the monitoring method which ensure to operate the passenger-carrying vehicles further safely and efficiently.

In the embodiment, the server 50, the video recorder 51, and the host server 52 are installed in the leading vehicle. However, they may be provided for the L2-SW of the rearmost vehicle, or the intermediate vehicle.

### Third Embodiment

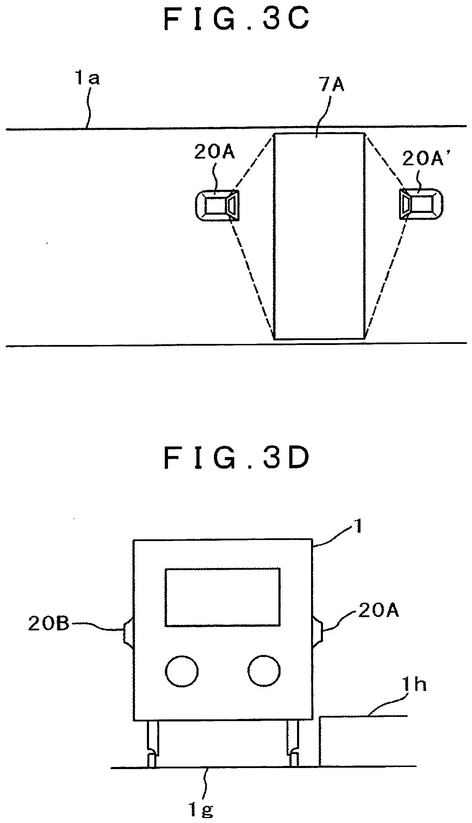

A third embodiment according to the present invention will be described referring to Figs. 3C and 3D.

Figs. 3C and 3D are explanatory views showing another embodiment of the monitor camera set position, which have been described in the first or the second embodiment of the present invention as shown in Figs. 3A and 3B. Any other description of the third embodiment is the same as that of the first or the second embodiment, and explanations thereof, thus will be omitted.

Fig. 3C is a side view of the area around the door 7A of the vehicle 1 of the train for getting on/off when seen from the platform 1h. The train is assumed to travel leftward. Fig. 3D is a front view of the vehicle 1A when seen from the travelling direction.

Referring to Fig. 3C, the monitor camera 20A is disposed on the outer wall of the vehicle 1 around the door 7A for getting on and off on the railroad 1g at the side of travelling direction. The capture visual field (angle of view) is set to capture the area around the door 7A. A monitor camera 20A' is disposed on the outer wall of the vehicle 1 around the door 7A for getting on and off on the railroad 1g at the rear side in the travelling direction. The capture visual field (angle of view) is set to capture the area around the door 7A toward the travelling direction.

As Fig. 3D shows, the monitor cameras 20B, 20B' are disposed on the opposite side surface. The embodiment as shown in Figs. 3C and 3D is configured to allow the monitor camera 20A to capture the area around the door from the front side in the travelling direction, and the monitor camera 20A' to capture the area around the door from the rear side in the travelling direction. The monitor cameras 20A and 20A' may be disposed at different heights, and have different capture visual fields.

The composite video, or any one of those transmitted from the monitor cameras 20A and 20A' to the monitor PCs 40 and 41 via the network in the train to be selectively switched will be displayed on the display screen.

For example, any one of the videos, which has larger motion amount than the other video may be selected for display. In the case where both videos have the motion amounts equal to or higher than the predetermined level, the videos may be displayed while being switched at predetermined time intervals, or the predetermined one of the videos may be displayed (for examples, the video captured by the monitor camera 20A from the front side) . In the case where both videos have the motion amounts lower than the predetermined level, the predetermined one of videos may be displayed (for example, the video captured by the monitor camera 20A from the front side) .

The first and the second embodiments are configured to dispose the single monitor camera for the single door. Likewise the embodiment described herein, it is possible to dispose a plurality of monitor cameras for the single door.

The third embodiment according to the present invention allows the driver or the crew to visually confirm passengers in association with opening/closing of doors of the passenger-carrying vehicle at a time on the monitor installed in the leading vehicle or in the rearmost vehicle. This makes it possible to provide the monitoring system and the monitoring method which ensure to operate the passenger-carrying vehicles further safely and efficiently.

This embodiment is configured to set more monitoring points compared with the first or the second embodiment. This makes it possible to ensure further reliable monitoring operation.

### Fourth Embodiment

A fourth embodiment according to the present invention will be described referring to Fig. 2B.

Fig. 2B shows a structure example of a monitoring system 100-1 configured to install a sub-server 54 and the host server 52 in the rearmost vehicle 4 in addition to the server 50 and the host server 52 (see Fig. 2A) installed in the leading vehicle 1 as described in the first embodiment according to the present invention.

Fig. 2B shows only the doors at one of the left and right sides of the vehicle, and the monitor cameras in association with those doors, and does not show the doors at the other side. Any other structures are common regardless of the doors either at the left side or right side.

A monitoring system 100-2 as shown in Fig. 2C is another example of the embodiment. Fig. 2C shows a structure example formed by installing the sub-server 54 in the rearmost vehicle 4 in addition to the server 50 and the host server 52 (see Fig. 2A) which are installed in the leading vehicle 1.

Other explanations of the fourth embodiment, which are similar to the first, the second, or the third embodiment will be omitted.

Referring to Figs. 2B and 2C, the video recorder 51 is installed in the leading vehicle 1. It will be clearly understood that the video recorder may be installed in the rearmost vehicle 4 or other vehicle. It is also possible to dispose the video recorders in each of the vehicles, respectively.

In this embodiment, the server 50, the video recorder 51, and the host server 52 are installed in the leading vehicle. However, they may be provided for the L2-SW of the rearmost vehicle, or the intermediate vehicles.

Any one of the server 50 and the sub-server 54 may be set as the main server. They may be set to allow the crew (driver) to operate those servers switchably according to circumstances wherever the crew is.

The fourth embodiment is configured to make the crew free from being in the leading vehicle for monitoring, and allow any one of a plurality of crews in the different vehicles separately to ensure confirmation with respect to safety. Although the crew expected to be seated on the driver's seat moves to the rearmost vehicle (vehicle in which the server and the monitor are installed), or the adjacent vehicle for any reason, the crew is allowed to carry out the monitoring quickly and reliably, thus improving safety for the train operation.

### Fifth Embodiment

In the first to the fourth embodiments according to the present invention, the trimming region (for example, rectangular region) has to be preliminarily set for the respective monitor cameras disposed on the vehicles so as to trim the required region from the video of the monitor camera.

Figs. 1, 2A, and 6A show an example of setting the rectangular region for trimming in the monitoring system according to the present invention.

In the case of the train formation as shown in Figs. 1 and 2A, in which the monitor cameras of the monitoring system 100 shown in Figs. 1 and 2A are disposed as indicated by Figs. 3A and 3B, the trimming frames may be newly set for the respective monitor cameras as described below.

A maintenance stuff of the monitoring system operates the monitor PC 40 by a not shown input/output device for setting the trimming frames for the respective monitor cameras.

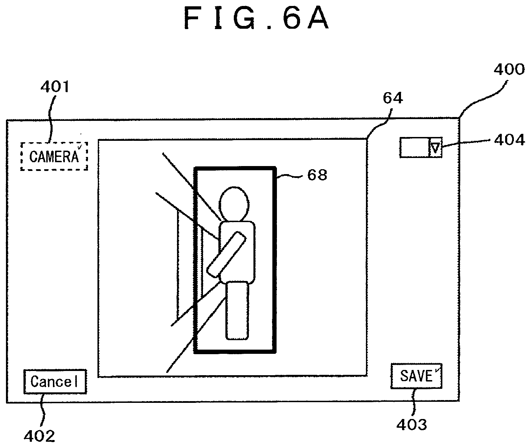

Fig. 6A shows a trimming frame set screen 400 which is displayed on the monitor PC 40.

As described above, the set screen shown in Fig. 6A is derived from operation of the not shown input/output device performed by the maintenance stuff to effectuate the set screen on the monitor PC 40 as shown in Fig. 6A. For example, the aforementioned operation is performed by the maintenance stuff for operating the monitor PC 40 through the MMI (Man Machine Interface) such as GUI (Graphical User Interface). For example, the maintenance stuff operates the set screen through the touch panel, the pointing device, or operation of the keyboard.

The maintenance stuff selects a camera selection button 401 on the set screen 400 to display a pop-up menu so as to select the monitor camera desired to set the trimming frame from the displayed menu. As a result, the selected camera number (camera 1) is displayed on the camera selection button 401. The video captured by the selected monitor camera is displayed on a video display section 464. The video shown in Fig. 6A corresponds to the video 64 captured by the monitor camera 20 (see Fig. 4C).

The trimming frame 68 is automatically displayed to have the predetermined size at the predetermined position on the video display section 464. The maintenance stuff sets the video displayed on the video display section 464 by changing the size and position of the video trimming frame.

Upon completion of setting of the trimming frame for the single monitor camera, the maintenance stuff presses a save button 403, and then selects another monitor camera from the camera selection button 401 to set the trimming frames for all the monitor cameras. Upon pressing of the save button 403 after completion of setting of the trimming frames for all the monitor cameras by the maintenance stuff, the message indicating completion of trimming frame setting is displayed, and the setting is stored. At this time, the maintenance stuff is prompted to make selection from the menus, for example, the menu for reconfirming the set trimming frame, another setting menu, and the setting completion by pressing a menu selection button 404.

It is possible to reset the operation by pressing a cancel button 402.

After the maintenance stuff finishes setting of the trimming frames for all the monitor cameras of the train monitoring system 100, and presses the set completion button (save button 403), the monitor PC 40 records the set trimming frames in association with the respective monitor cameras.

The trimming frame information set by the monitor PC 40 is transmitted to the server 50. The server 50 stores the set trimming frame information in association with the respective monitor cameras and the monitor PCs for setting.

The trimming frame is preliminarily set by the maintenance stuff using the monitor PC 40 for all the monitor cameras in the following procedures 1 to 6. Then each video captured by the respective monitor cameras is displayed on the monitor PC 40 so that the displayed superimposed trimming frames are moved and entered by pressing the return (save) button.
(Procedure 1) The maintenance stuff sets or changes the trimming frame by operating the monitor PC 40. Every time the trimming frame is set or changed, the monitor PC 40 records the set trimming frame or updates the trimming frame to the changed one for the respective monitor cameras.
(Procedure 2) The monitor PC 40 notifies the server 50 that the trimming frame information has been set or changed.
(Procedure 3) In response to reception of the notification, the server 50 sends the request to the monitor PC 40 for information on the set or changed trimming frame.
(Procedure 4) In response to reception of the request, the monitor PC 40 transmits the information on the set or changed trimming frame to the server 50.
(Procedure 5) The server 50 records or updates the received trimming frame information, and outputs the received trimming frame information to the other server or sub-server, and other monitor or the monitor PC (hereinafter referred to as other device), if any.
(Procedure 6) The other device records or updates the trimming frame information received from the server 50.

There may be the case where the video recorder 51 records the trimming frame. In this case, after execution of the procedures 1 to 4, the server 50 outputs the received trimming frame information to the video recorder 51 in the procedure 5. Then in the procedure 6, the video recorder 51 records or updates the received trimming frame information.

In the case where the monitor PC 40 records the trimming frame information, the procedures 2, 3 and 4 among those 1 to 6 are omitted. Then in the procedure 5, the monitor PC records or updates the received trimming frame information, and outputs the received trimming frame information to the server or the sub-server, and the other monitor or the monitor PC (hereinafter referred to as other device), if any.

In the procedure 6, the other device records or updates the trimming frame information received form the monitor PC 40.

An embodiment of the display operation of the monitoring system 100 during the train operation will be described.
(Operation 1) The server 50 as the main server receives the train operation information from the host server 52. The main server determines whether the train speed is equal to or higher than the predetermined value, or lower than the predetermined value based on the speed information, determines whether the entrance door is opened or closed based on the entrance door opening/closing information, and determines as to which side the door is opened and closed.
(Operation 2) If it is determined that the speed is lower than the predetermined value, and the entrance door is opened, the main server transmits the monitor camera information (whether the monitor camera is at the side A or side B) corresponding to the received entrance door information, and the new trimming frame information relating to the corresponding monitor camera. Assuming that the monitor PC 40 is the main monitor, and the monitor PC 41 is the sub monitor, if there are 8 monitor cameras for the train set including 4 vehicles, the display screen of the main monitor is divided into 8 sections for display, and the display screen of the sub monitor is turned off. If there are 16 monitor cameras for the train set including 8 vehicles, the display screen of the main monitor is divided into 8 sections for display, and the display screen of the sub monitor is divided into 8 sections for display. In such a case, the main server transmits the information for identifying the monitor camera (door) from which the video is acquired, and indicating how the 8 divided screens are assigned for display to the two monitors.
(Operation 3) The monitor PC sends the request to the corresponding monitor camera to transmit the video in accordance with the transmitted information. The videos of the respective monitor cameras are assigned to the screens for display.
(Operation 4) In response to reception of the transmission request, the monitor camera transmits the captured video to the monitor PC that has sent the request.
(Operation 5) The monitor PC trims the predetermined region from the received video, and displays the trimmed video on the determined screen.
(Operation 6) The main server repeatedly executes the operations 1 to 5 in the case where it is determined that the train is in the stop state based on the train operation information transmitted from the host server. If it is determined that the train has started travelling based on the train operation information transmitted from the host server, the main server transmits the instruction to the monitor PC to stop the video display.
(Operation 7) The monitor PC stops sending the video transmission request to the corresponding monitor camera, and turns the screen display off.

The process then returns to the (Operation 1).

In the case where the video recorder records the trimming frame information, the main server does not transmit the trimming frame information in (Operation 2), and the monitor PC 40 sends the request to the video recorder 51 for the trimming frame information so as to acquire such information.

In the case where the monitor PC records the trimming frame information, the main server does not transmit the trimming frame information in (Operation 2), and the monitor PC 40 makes a reference with the trimming frame information recorded therein.

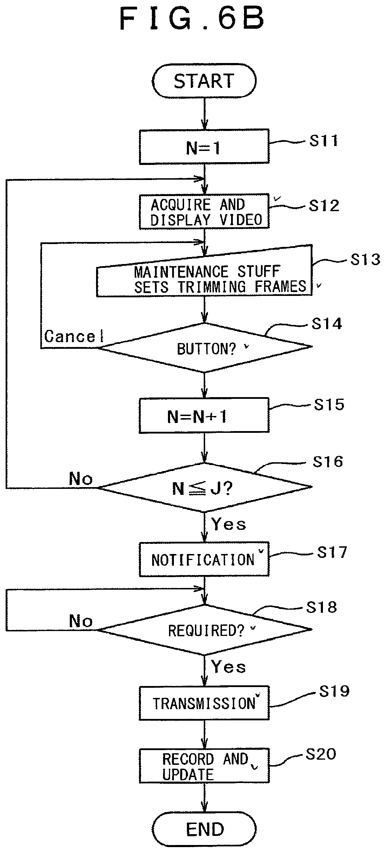

Fig. 6B shows an example of the flowchart for setting the trimming frame in the monitoring system according to the present invention.

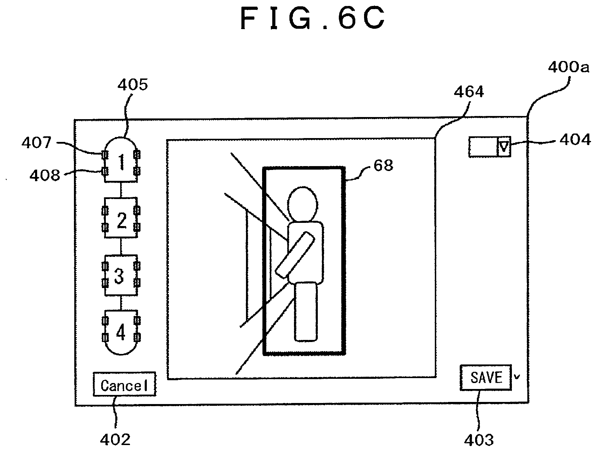

The flowchart shown in Fig. 6B will be described referring to the set screen 400 shown in Fig. 6A. Fig. 6C shows an example of the process for setting the video trimming regions (trimming frames) for the respective videos with respect to all the monitor cameras (total number : J). The flowchart shown in Fig. 6B is executed by the monitor PC such as the monitor PC 40 unless otherwise specified.

In initialization step S11, the variable N is set to 1 (N = 1) . Then the set camera number N is displayed on the camera selection button 401 of the set screen 400.

In video acquiring and display step S12, the request is sent to the monitor camera N for the video captured thereby for acquirement, and the acquired video is displayed on the video display section 464 of the set screen 400.

In step S13 for trimming frame setting by maintenance stuff, the maintenance stuff operates the monitor PC to set the trimming frame on the video display section 464. Upon completion of setting, the save button 403 is pressed. The cancel button 402 may be pressed for resetting.

In button confirmation step S14, it is monitored whether or not the save button 403 or the cancel button 402 has been pressed. If the save button 403 has been pressed, the set trimming frame information is recorded in association with the camera number. The process then proceeds to variable increment step S15. In the case of the new camera number, the information is recorded in association with the new camera number. In the case of the existing camera number, the trimming frame information of the camera number is updated to the newly set information. If the cancel button 402 is pressed, the process returns to the step S13 for trimming frame setting by maintenance stuff. In the button confirmations step S14, the process is kept in the standby state until any of the buttons is pressed.

In the variable increment step S15, the variable N is incremented by 1.

In variable determination step S16, it is determined whether the variable N is equal to or smaller than J (N≦J), or larger than J (N>J). If the variable N is equal to or smaller than J, the process returns to video acquirement and display step S12 where the trimming frame setting process is executed for the next monitor camera. If the variable N is larger than J, the process proceeds to notification step S17.

In the notification step S17, the server 50 is notified that the trimming frame information has been set or changed.

In request determination step S18, it is determined whether or not the request for transmission of the trimming frame information has been sent from the server 50. If there is the transmission request, the trimming frame information is transmitted to the server 50. If there is no transmission request, the process is repeatedly executed in the request determinations step S18 so as to be kept in the standby state.

In transmission step S19, the set or changed trimming frame information is transmitted to the server 50.

In recording and updating step S20, the server 50 collates the received trimming frame information with each of the recorded monitor cameras. In the case of the new camera number, the information is recorded in association with the new camera number. In the case of the already recorded camera numbers, the trimming frame information for the camera number is updated to the transmitted information. Subsequently or simultaneously, the server 50 transmits the trimming frame information of the respective monitor cameras to the other monitor PC of the monitoring system. Upon reception of the information, based on the received monitor camera trimming frame information, the monitor PC sets or changes the trimming frame information of the monitor camera.

In addition to the advantageous effects from any one of the first to the fourth embodiments, this embodiment is configured to quickly set and store the trimming frame of the monitor camera with ease instinctively, which is operated by the monitor PC, and to transmit such information to the server for storage.

The monitor PC and the server receive the train set information from the host server at a time of making up the train set or thereafter, and correlate the trimming frame information with the monitor camera set position calculated from the train set information and the onboard device information recorded by them.

The embodiment is configured to display the screen shown in Fig. 6A on the display screen of the monitor PC 40. However, it may be displayed on the display screen of the monitor PC 41, 42, or 43.

The embodiment explains the trimming frame set by using the monitor PC 40, the server 50, and the video recorder 51 which are installed in the leading vehicle 1. However, it is possible to use any of the monitor PCs, and any of the servers, or the sub-servers. So long as a plurality of video recorders are provided, they may be installed in arbitrary vehicles.

### Sixth Embodiment

A sixth embodiment according to the present invention will be described referring to Fig. 6C. Fig. 6C shows a trimming frame set screen 400a displayed on the monitor PC 40.

The set screen 400a shown in Fig. 6C is different from the set screen 400 shown in Fig. 6A in a camera selection button 405 expressed as the train set (in Fig. 6C, seen from above) instead of the camera selection button 401.

Specifically, in Fig. 6C, the vehicles from the leading vehicle to the rearmost vehicle are displayed in the order of connection. The maintenance stuff sets the trimming frame of the respective monitor cameras by selecting the camera selection button 405 corresponding to the desired door (if the single monitor camera is disposed on the vehicle around each door), or the monitor camera with a not shown input device. The selected monitor camera is displayed with flashing or color so as to allow the maintenance stuff to distinguish the selected monitor camera from the other monitor cameras.

The subsequent operations are the same as those described in the fifth embodiment.

The monitor camera display having the trimming frame information changed or newly set by the operation may be shown in the color different from the color for display of the monitor camera which has not been changed nor set.

In addition to the advantageous effects from the sixth embodiment, the embodiment allows the operator to set and store the trimming frames for the respective monitor cameras further instinctively. This makes it possible to set and store the trimming frames further quickly and easily.

### Seventh Embodiment

It is assumed to couple a plurality of train sets each having the monitoring system according to any one of the first to the sixth embodiments (for example, coupling the single train set with another singe train set) . In such a case, the monitoring systems respectively installed in the trains. have to be integrated into the single monitoring system. From the viewpoint that the single crew, for example, the driver is expected to carry out various jobs even after increase in the number of vehicles added to the train, it is rational for the crew to handle the single monitoring system for operating the train.

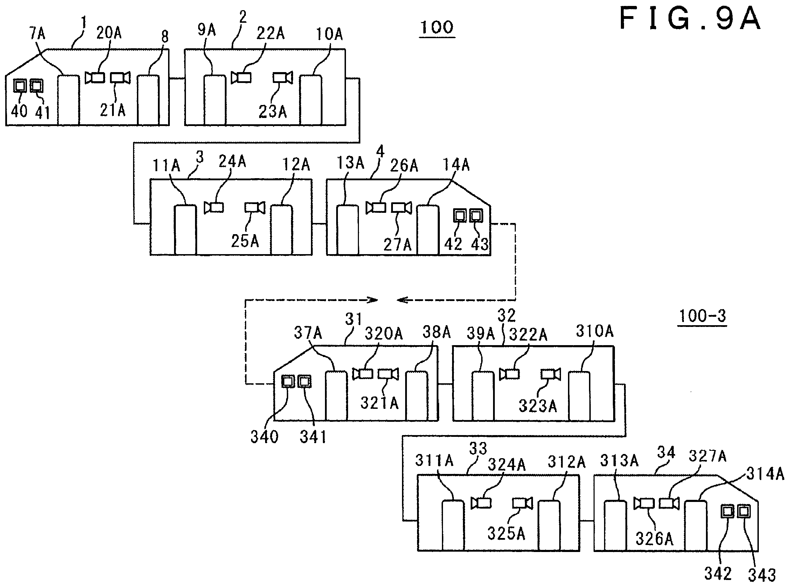

A seventh embodiment will be described referring to Figs. 9A, 9B, 10, and 11.

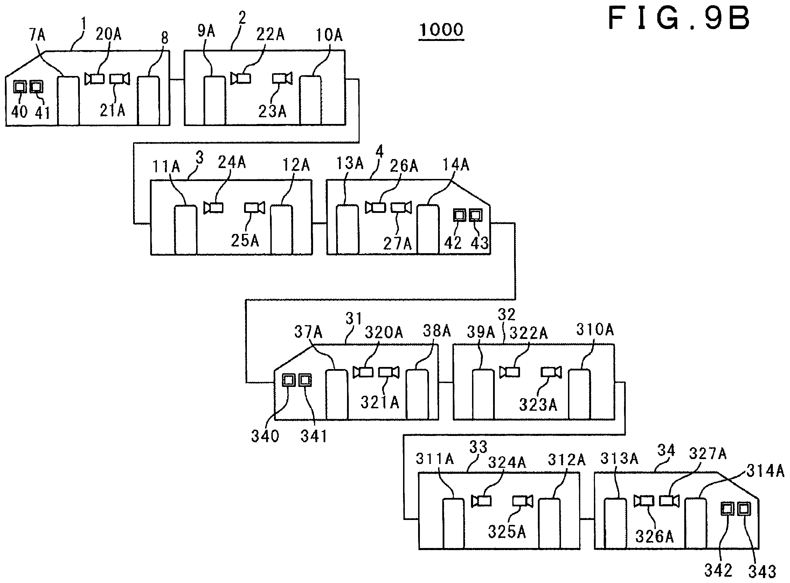

Figs. 9A and 9B are schematic system layouts for explaining an embodiment of the monitoring system according to the present invention. Fig. 9A shows the monitoring systems 100 and 100-3, each of which is installed in each of the two train sets before they are coupled, respectively. Fig. 9B shows a monitoring system 1000 after coupling the two train sets together as shown in Fig. 9A.

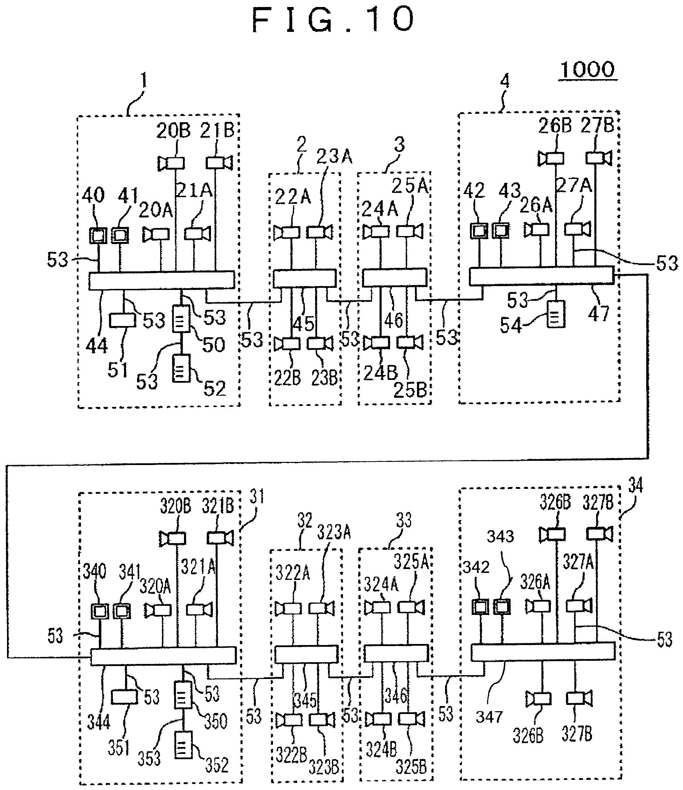

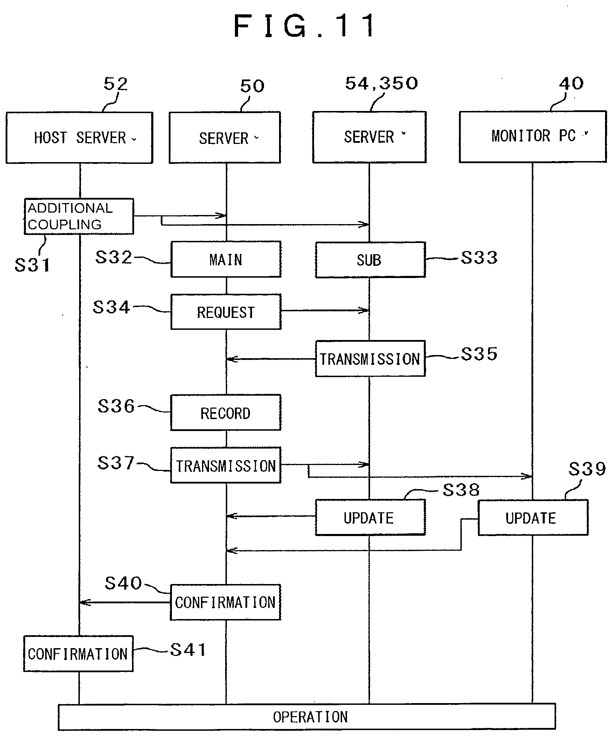

Fig. 10 is a block diagram for explaining an embodiment of the monitoring system structure after additional coupling as shown in Fig. 9B. Fig. 11 is a timing chart for explaining an embodiment of operations of the monitoring system at a time of additional coupling.

As Fig. 9A shows, each of the 2 train sets includes 4 connected vehicles . One of the train sets includes the monitoring system 100 as shown in Figs. 1 and 2A. The other train set includes a monitoring system 100-3 with the structure similar to the monitoring system 100 as shown in Figs. 1 and 2A. Likewise Fig. 1, Figs. 9A and 9b do not show all the components of the monitoring system. Fig. 10 shows the structure of the monitoring system in detail.

In the case where the two train sets as shown in Fig. 9A are coupled together to form the single train set as shown in Fig. 9B, described herein will be the method of setting the trimming frame information for the respective monitor cameras to be displayed on the monitor PC referring to Figs. 10 and 11.

Likewise the first to the sixth embodiments, Figs. 9A, 9B, and 10 show only the doors at the left side among those at both sides of the vehicle, and the monitor cameras in association with those doors at one side without showing the doors and the associated monitor cameras at the other side. Any other structures are common regardless of the doors either at the left side or the right side.

Referring to the monitoring system 1000 of Fig. 10 according to the seventh embodiment after additional coupling, vehicles 31 to 34 are coupled to the rear of the vehicle 1 to 4.

As the vehicles from the leading vehicle 1 to the vehicle 4 have been explained in the first embodiment, explanations of those vehicles will be omitted. Likewise, the vehicle 31 of the train set including the vehicles 31 to 34 has a server (server) 350, a video recorder 351, a host server 352, monitor cameras 320A, 321A, 320B, 321B, monitor PCs 340, 341, and an L2-SW 344. The server 350, the video recorder 351, the monitor PCs 340, 341, and the monitor cameras 320A, 321A, 320B, 321B are connected to the L2-SW 344 via the network cable 53. The host server 352 is connected to the server 350 via the network cable 53. The L2-SW 344 is connected to the L2-SW 345 installed in the subsequent vehicle 32 via the network cable 53.

The vehicle 32 includes monitor cameras 322A, 323A, 322B, 323B, and the L2-SW 345. The L2-SW 345 is connected to the L2-SW 344 installed in the preceding vehicle 31, and the L2-SW 346 installed in the subsequent vehicle 33, respectively via the network cable 53. Likewise the vehicle 32, the vehicle 33 includes the monitor cameras 324A, 325A, 324B, 325B, and the L2-SW 346. The L2-SW 346 is connected to the L2-SW 345 installed in the preceding vehicle 32, and an L2-SW 347 installed in the subsequent vehicle 34, respectively via the network cable 53.

The rearmost vehicle 34 includes monitor cameras 326A, 327A, 326B, 327B, monitor PCs 342, 343, and the L2-SW 347. The monitor cameras 326A, 327A, 326B, 327B, and the monitor PCs 342, 343 are connected to the L2-SW 347, respectively via the network cable 53. The L2-SW 347 is connected to the L2-SW 346 installed in the preceding vehicle 33 via the network cable 53.

In this way, likewise the vehicles 1 to 4, the vehicles 31 and 32, 32 and 33, 33 and 34 as the rearmost vehicle are coupled by connecting the L2-SWs installed in the adjacent vehicles via the network cable 53. The respective L2-SWs (L2-SWs 47 and 344) in the vehicles 4 and 31 are connected with network via a not shown jumper wire.

As a result, the single network is constructed in the train set.

In the embodiment, the train set (train set A) with the monitoring system 100 as shown in Fig. 9A installed therein is coupled with the train set (train set B) including the monitoring system 100-3 installed therein so as to form the train set (train set C) including the monitoring system 1000 as shown in Fig. 9B.

In such a case, each server (servers 50 and 350) of the respective monitoring systems store the trimming frame information which allows display of videos of the respective monitor cameras on the monitor PCs. The server 50 does not record the trimming frame information of the monitor cameras 320 to 327 recorded in the server 350. Likewise, the server 350 does not record the trimming frame information of the monitor cameras 20 to 27 recorded in the server 50.

The embodiment is configured to set the server as the main server upon additional coupling, and acquire the trimming frame information of the monitor camera from the other server, which will be recorded as the trimming frame information for the new monitoring system 1000.

In the case of coupling the train set B with the train set A, in additional coupling step S31 of Fig. 11, the host server 52 transmits the operation information to the three servers 50, 54, and 350 upon additional coupling or thereafter so as to determine the server to be set as the main server. In the embodiment, the server 50 of the monitoring system 100 installed in the train set A at the front side is set as the main server.

In main server identification step S32, the server 50 is identified as the main server based on the information received from the host server 52.

In sub-server identification step S33, the servers 54 and 350 are identified as being sub-servers based on the information received from the host server 52, or the main server 50.

The steps S32 and S33 may be executed simultaneously. In some instances, the information of the host server may be transmitted only to the server identified as the main server.

In trimming frame information request step S34, the server 50 set as the main server sends the request to the server 350 as the sub-server for the trimming frame information of the monitoring system 100-3.

In trimming frame information transmission step S35, the server 350 transmits the recorded trimming frame information of the monitoring system 100-3 to the server 50.

In trimming frame information record step S36, the server 50 combines the trimming frame information transmitted from the server 350 and the recorded trimming frame information of the monitoring system 100 into the trimming frame information of the monitoring system 1000 so as to be recorded together with the monitor camera information. At this time, the trimming frame information of the monitoring system 100 is not deleted.

In step S37 for trimming frame information transmission after additional coupling, the server 50 transmits the recorded trimming frame information of the monitoring system 1000 to the servers 54, 350 and the monitor PC 40. In the embodiment as shown in Fig. 11, the information is transmitted only to the monitor PC 40. Actually, however, if there are servers (other servers) besides the servers 50, 54, 350, and monitor PCs (other monitor PCs) besides the monitor PC 40, the information will be transmitted to all those devices.

In this case, preferably, 8 divided sections of the video captured by the monitor cameras 20A to 27A, or 20B to 27B are displayed on the screen of the monitor PC 40, and 8 divided sections of the video captured by the monitor cameras 320A to 327A, or 320B to 327B are displayed on the screen of the monitor PC 41. Because of large sized screen, the driver is capable of observing passengers getting on and off the train easily, thus improving reliability of monitoring.

In step S38 for trimming frame information updating after additional coupling, the servers 54 and 350 record the received trimming frame information of the monitoring system 1000. In this case, the trimming frame information of the monitoring system 100-3 is not deleted. After recording, the servers 54 and 350 transmit the record end information to the server 50.

In step S39 for trimming frame information updating after additional coupling, the monitor PC 40 and other monitor PCs record the received trimming frame information of the monitoring system 1000. The other server records the received trimming frame information of the monitoring system 1000, and does not delete the previous trimming frame information of the monitoring system 100-3. After recording, the monitor PC 40, the other monitor PC, and the other server transmit the record end information to the server 50.

In step S40 for trimming frame information confirmation after additional coupling, the server 50 confirms reception of the record end information from the servers 54, 350 and the monitor PC 40 (including other servers and monitor PCs).

In confirmation step S41, the host server 52 confirms with respect to operability of the monitoring system 1000 based on the information received from the server 50, and permits to start operation of the monitoring system 1000.

Referring to the timing chart as shown in Fig. 11, transmission to the other device requires network connection by calling the target, and confirming acknowledgment from the target. The aforementioned procedure is so complicated that the explanation will be omitted.

In addition to the advantageous effects from any one of the first to the sixth embodiments, this embodiment allows quick and easy setting of the monitoring system upon additional coupling of the train set, and accordingly, improves reliability of the monitoring system.

In the embodiment, the train set including 4 vehicles is coupled with another train set including 4 vehicles. It is also possible to couple the train set including at least one vehicle with another train set including at least one vehicle. It is also possible to couple a plurality of train sets each including at least one vehicle.

In the embodiment, in any of the train sets, the server is installed in the leading vehicle before additional coupling. However, the server may be installed in any of the vehicles, and a plurality of servers may be installed.

In the case where the video recorder records the trimming frame information, the newly set main server 50 sends the request to the video recorders 51 and 351 for the trimming frame information, not to the sub-servers 54 and/or 350 instead of executing the step S34. Then the respective video recorders will transmit the trimming frame information instead of executing the step S35.

In the case where the monitor PC records the trimming frame information, the main server 50 sends the request to the monitor PCs 40 and 340 for the trimming frame information, not to the sub-servers 54 and/or 350 instead of executing the step S34. Then the respective monitor PCs will transmit the trimming frame information instead of executing the step S35. Instead of executing the step S37, the main server transmits the trimming frame information to the respective monitor PCs, and in step S40, the video recorder will update the trimming frame information as well.

### Eighth Embodiment

In the seventh embodiment, the description has been made with respect to recording of the trimming frame information of the monitoring system in additional coupling of the train. In this embodiment, the description will be made with respect to recording of the trimming frame information of the monitoring system in the case of uncoupling additionally coupled train into the original train sets.

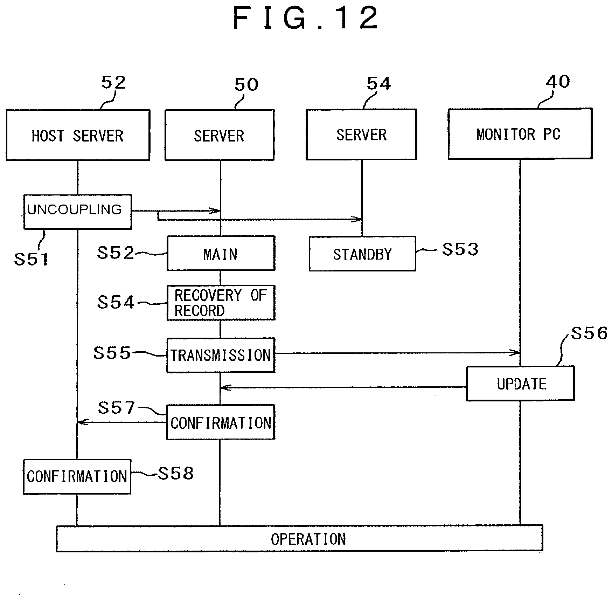

In this embodiment, the description will be made referring to Figs. 2A and 12 as well as Figs. 9A, 9B, 10 used for the seventh embodiment. Fig. 12 is a timing chart for explaining an embodiment of the system operation of the monitoring system according to the present invention in the case of uncoupling.

The description in this embodiment will be made about the case where the vehicles 31 to 34 at the rear part, which constitute the train set B with the monitoring system 100-3 are disengaged (uncoupled) from the train set C with the monitoring system 1000 as shown in Fig. 10 so as to restore the train formation to the train set A with the original monitoring system 100 (see Figs. 1 and 2A).

Specifically, referring to Figs. 10 and 12, the method of setting the trimming frame information of the respective monitor cameras for display on the monitor PC will be described with respect to the case where the single train set (train set C) as shown in Fig. 9B is uncoupled into two train sets (train sets A and B) as shown in Fig. 9A so that the train (train set A) with the monitoring system 100 is operated onward.

Likewise the first to the sixth embodiments, Figs. 9A, 9B, and 10 show only the doors at the left side among those at both sides of the vehicle, and the monitor cameras in association with those doors at one side without showing the doors and the associated monitor cameras at the other side. Any other structures are common regardless of the doors either at the left side or the right side.

Referring to the monitoring system 1000 after additional coupling as shown in Fig. 10 according to the seventh embodiment, the vehicles 1 to 4 are coupled with the vehicles 31 to 34 positioned to the rear thereof.

Referring to Fig. 12, in releasing step S51, the host server 52 transmits the operation information to the two servers 50 and 54 upon uncoupling or thereafter, and determines as to which server is set as the main server based on the operation information. In the embodiment, the server 50 of the monitoring system 100 installed in the train set A at the front side is set as the main server.

In main server identifications step S52, the server 50 is identified as being the main server based on the information received from the host server 52.

In server standby step S53, the server 54 is halted based on the information received from the host server 52 or the main server 50.

The steps S52 and S53 may be executed simultaneously.

In trimming frame information recovery step S54, the server 50 as the main server switches the system information to the previously recorded trimming frame information of the monitoring system 100 in the train set A.

In step S55 for trimming frame information transmission after uncoupling, the server 50 transmits the recovered trimming frame information of the monitoring system 100 to the monitor PC 40. In the embodiment shown in Fig. 12, the information is transmitted only to the monitor PC 40. If there are servers (other servers) besides the server 50 and monitor PCs (other monitor PCs) besides the monitor PC 40 for constituting the monitoring system 100, the information may be transmitted to all those devices.

In step S56 for trimming frame information updating after uncoupling, the monitor PC 40 and the other monitor PCs record the received trimming frame information of the monitoring system 100. Any other server records the received trimming frame information of the monitoring system 100, and does not delete the previous trimming frame information of the monitoring system 1000. However, such server is allowed to delete the previous trimming frame information. The monitor PC 40, other monitor PCs, and other servers transmit the record end information to the server 50 after recording.

In step S57 for trimming frame information confirmation after uncoupling, the server 50 confirms reception of the record end information from the monitor PC 40 (including other server and other monitor PC).

In confirmation step S58, the host server 52 confirms that the monitoring system 100 is operable based on the information received from the server 50, and permits to start operation of the monitoring system 100.

Referring to the timing chart as shown in Fig. 12, likewise Fig. 11, transmission to the other device requires network connection by calling the target, and confirming reception from the target. The aforementioned procedure is so complicated that the explanation will be omitted.

Meanwhile, in the monitoring system 100-3 of the uncoupled train set, the server 350 receives the operation information from the host server 52, and starts the system as the main server likewise the monitoring system 100.

In addition to the advantageous effects from any of the first to seventh embodiment, this embodiment allows quick and easy setting of the monitoring system upon uncoupling of the train set, and accordingly, improves reliability of the monitoring system.

In the embodiment, the train set is uncoupled into the original train sets each including 4 vehicles. It is also possible to uncouple the train set into the trains each including vehicles fewer than those of the original train set.

In the embodiment, each server for the respective train sets is configured to record the trimming frame information for the corresponding train set. Each server is capable of switching the system information to the trimming frame information of the corresponding monitoring system in response to the instruction to switch the monitoring system for the respective train sets. This allows the monitoring system in the train set once recorded to quickly recover without calling the trimming frame information among the servers upon additional coupling or uncoupling.

In the case of the station having the platform shorter than the train, the entrance doors at one side may be partially opened and closed. In such a case, the operation information received from the host server may contain the information indicating not only which side the door is opened but also which door is opened so as to allow display of the video showing only doors to be opened on the monitor PC, which may differ depending on the station.

The application examples to the vehicle have been described as aforementioned.

In the embodiment, the host server is disposed inside the train. However, it is possible to dispose the host server outside the train for communication with the monitoring system as needed by using the wireless communication device.

In the aforementioned embodiment, 4 doors (2 doors at each side) are formed in each of the vehicles. It is also possible to form the arbitrary number of doors.

In the case where the trimming frame information is recorded in the video recorder or the monitor PC, the same operation as the one executed in the seventh embodiment may be applied.

### List of Reference Signs

1-4, 31-34: vehicle
1g: railroad
1h: platform
7A-14A, 7B-14B, 37A-39A, 37B-39B, 310A-314A, 310B-314B: door,
20A-27A, 20A', 20B-27B, 320A-327A, 320B-327B: monitor camera,
40-43, 340-343: monitor PC,
44-47, 344-347: LS-SW,
50,350: server,
51,351: video recorder,
52: host server,
53: network cable,
54: sub-server,
60-1-60-7, 61-1-61-7: screen area,
64, 65, 66, 67: screen area,
68: trimming frame,
69: detection region,
100, 100-1, 100-2, 100-3, 1000: monitoring system,
400, 400a: set screen,
401: camera selection button,
402: cancel button,
403: save button,
404: menu selection button,
464: video display section

## Claims

1. A monitoring system installed in a railway vehicle, having a server (50), a monitor (40), a plurality of cameras (20∼27) disposed on a vehicle constituting the railway vehicle at positions that ensure capturing videos of areas around entrance doors of the vehicle, and a layer switch (44∼47) connected with one another via a network (53),
wherein the server is adapted to receive operation information,
the operation information received by the server (50) from a host server (52) contains entrance door information identifying a door opening side of the vehicle,
**characterised in that**
the monitor (40) is adapted to acquire trimming frame information which is information having been set for each of the cameras (20∼27) to derive a trimmed video by trimming the video captured by the camera, and
the monitor (40) holds information on the correlation between videos of cameras selected in accordance with the entrance door information and sections into which a video to be displayed on the monitor (40) is divided and which are each for a trimmed video derived from the video captured by the respective camera based on the trimming frame information, so that the trimmed videos of the cameras in association with the door opening side are displayed in said sections (60-0 ∼ 60-7) on the monitor.

2. The monitoring system according to claim 1, wherein:
the operation information includes speed information indicating a traveling speed of the railway vehicle, and the entrance door information;
in the case where the traveling speed is lower than a predetermined value, and the door is opened, the monitor displays the video of the cameras; and
in the case where the travelling speed is equal to or higher than the predetermined value, or the door is closed, the monitor stops displaying the video.

3. The monitoring system according to claim 1 or 2, wherein:
the server (50) records the trimming frame information for the respective cameras (20∼27);
in the case where the operation information is under a predetermined condition, the server transmits the trimming frame information and camera information with respect to the video of the camera for display to the monitor;
the monitor (40) updates previously set trimming frame information on the basis of the received trimming frame information, and acquires the videos from the respective cameras in accordance with the received camera information; and
each of the videos is trimmed in accordance with the updated trimming frame information for displaying the trimmed videos in the divided screens.

4. The monitoring system according to any one of claims 1 to 3, further comprising a recorder (51) for recording the videos from the cameras (20∼27), wherein the recorder is adapted to further record the trimming frame information and the monitor is adapted to acquire the trimming frame information by requesting it from the recorder.

5. The monitoring system according to any one of claims 1 to 4, wherein upon reception of additional coupling information from the host server (52), the server (50) communicates with a server of the additionally coupled railway vehicle so that the server set as a main server acquires the trimming frame information from a sub-server to update the trimming frame information of the associated vehicle, and the updated trimming frame information is transmitted to the monitor.

6. A monitoring method for a monitoring system installed in a railway vehicle and having a server (50), a monitor (40), a plurality of cameras (20∼27) disposed on a vehicle constituting the railway vehicle at positions that ensure capturing videos of areas around entrance doors of the vehicle, and a layer switch (44∼47) connected with one another via a network (53),
wherein the server receives operation information from a host server (52) which operation information contains entrance door information identifying a door opening side of the vehicle,
**characterised in that**
the monitor (40) acquires trimming frame information which is information having been set for each of the cameras (20∼27) to derive a trimmed video by trimming the video captured by the camera, and
the monitor (40) holds information on the correlation between videos of cameras selected in accordance with the entrance door information and sections into which a video displayed on the monitor (40) is divided and which are each for a trimmed video derived from the video captured by the respective camera based on the trimming frame information, and thereby displays in said sections (60-0 ∼ 60-7) the trimmed videos of the cameras in association with the door opening side.

7. The monitoring method according to claim 6, wherein:
the operation information includes speed information indicating a traveling speed of the railway vehicle, and the entrance door information;
in the case where the traveling speed is lower than a predetermined value, and the door is opened, the monitor displays the video of the camera; and
in the case where the travelling speed is equal to or higher than the predetermined value, or the door is closed, the monitor stops displaying the video.

8. The monitoring method according to claim 6 or 7, wherein:
the server (50) records the trimming frame information for the respective cameras (20∼27);
in the case where the operation information is under a predetermined condition, the server transmits the trimming frame information and camera information with respect to the video of the camera for display to the monitor;
the monitor (40) updates previously set trimming frame information on the basis of the received trimming frame information, and acquires the videos from the respective cameras in accordance with the received camera information; and
each of the videos is trimmed in accordance with the updated trimming frame information for displaying the trimmed videos in divided screens.

9. The monitoring method according to any one of claims 6 to 8, wherein a recorder (51) records the videos from the cameras (20∼27) and the trimming frame information, and the monitor acquires the trimming frame information by requesting it from the recorder.

10. The monitoring method according to any one of claims 6 to 9, wherein upon reception of additional coupling information from the host server (52), the server (50) communicates with a server of the additionally coupled railway vehicle so that the server set as a main server acquires the trimming frame information from a sub-server to update the trimming frame information of the associated vehicle, and the updated trimming frame information is transmitted to the monitor.

## Patentansprüche

1. Überwachungssystem, das in einem Schienenfahrzeug installiert ist und einen Server (50), einen Monitor (40), mehrere Kameras (20-27), die auf einem das Schienenfahrzeug bildenden Fahrzeug an Positionen angeordnet sind, die die Aufnahme von Videos von Bereichen um Eingangstüren des Fahrzeugs ermöglichen, sowie einen Layer-Switch (44-47) aufweist, die über ein Netzwerk (53) miteinander verbunden sind,
wobei der Server eingerichtet ist, Betriebsinformationen zu empfangen,
die durch den Server (50) von einem Host-Server (52) her empfangenen Betriebsinformationen Eingangstürinformationen enthalten, die eine Türöffnungsseite des Fahrzeugs angeben,
**dadurch gekennzeichnet, dass**
der Monitor (40) eingerichtet ist, Zuschnittsrahmeninformationen zu gewinnen, bei denen es sich um Informationen handelt, die für jede der Kameras (20∼27) festgelegt sind, um durch Zuschnitt des von der Kamera aufgenommenen Videos ein zugeschnittenes Video zu gewinnen, und
der Monitor (40) Informationen über die Korrelation zwischen Videos von entsprechend den Eingangstürinformationen gewählten Kameras und Abschnitten hält, in die ein auf dem Monitor (40) anzuzeigendes Video unterteilt ist und die jeweils für ein zugeschnittenes Video vorgesehen sind, das aufgrund der Zuschnittsrahmeninformationen von dem von der entsprechenden Kamera aufgenommenen Video gewonnen ist, so dass die zugeschnittenen Videos der Kameras in Zuordnung zur Türöffnungsseite in den Abschnitten (60-0 - 60-7) auf dem Monitor angezeigt werden.

2. Überwachungssystem nach Anspruch 1, wobei
die Betriebsinformationen eine Fahrgeschwindigkeit des Schienenfahrzeugs angebende Geschwindigkeitsinformationen und die Eingangstürinformationen enthalten,
der Monitor das Video der Kameras dann anzeigt, wenn die Fahrgeschwindigkeit niedriger als ein vorbestimmter Wert ist und die Tür offen ist, und
der Monitor die Anzeige des Videos dann anhält, wenn die Fahrgeschwindigkeit gleich oder größer als der vorbestimmte Wert ist oder die Tür geschlossen ist.

3. Überwachungssystem nach Anspruch 1 oder 2, wobei
der Server (50) die Zuschnittsrahmeninformationen für die entsprechenden Kameras (20-27) aufzeichnet;
der Server die Zuschnittsrahmeninformationen und Kamerainformationen bezüglich des Videos der Kamera zur Anzeige an den Monitor übermittelt, wenn die Betriebsinformationen einer vorbestimmten Bedingung unterliegen;
der Monitor (40) zuvor festgelegte Zuschnittsrahmeninformationen aufgrund der empfangenen Zuschnittsrahmeninformationen aktualisiert und die Videos von den entsprechenden Kameras entsprechend den empfangenen Kamerainformationen gewinnt; und
die Videos jeweils entsprechend den aktualisierten Zuschnittsrahmeninformationen zugeschnitten werden, um die zugeschnittenen Videos in den unterteilten Bildschirmen anzuzeigen.

4. Überwachungssystem nach einem der Ansprüche 1 bis 3 mit einem Rekorder (51) zum Aufzeichnen der Videos von den Kameras (20-27), wobei der Rekorder eingerichtet ist, außerdem die Zuschnittsrahmeninformationen aufzuzeichnen, und der Monitor eingerichtet ist, die Zuschnittsrahmeninformationen durch Anfordern vom Rekorder zu gewinnen.

5. Überwachungssystem nach einem der Ansprüche 1 bis 4, wobei der Server (50) bei Empfang von zusätzlichen Kopplungsinformationen vom Host-Server (52) mit einem Server des zusätzlich gekoppelten Schienenfahrzeugs kommuniziert, so dass der als Hauptserver festgelegte Server die Zuschnittsrahmeninformationen von einem Unterserver gewinnt, um die Zuschnittsrahmeninformationen des zugeordneten Fahrzeugs zu aktualisieren, und so dass die aktualisierten Zuschnittsrahmeninformationen an den Monitor übermittelt werden.

6. Überwachungsverfahren für ein Überwachungssystem, das in einem Schienenfahrzeug installiert ist und einen Server (50), einen Monitor (40), mehrere Kameras (20-27), die auf einem das Schienenfahrzeug bildenden Fahrzeug an Positionen angeordnet sind, die die Aufnahme von Videos von Bereichen um Eingangstüren des Fahrzeugs erlauben, sowie einen Layer-Switch (44-47) aufweist, die über ein Netzwerk (53) miteinander verbunden sind,
wobei der Server von einen Host-Server (52) Betriebsinformationen empfängt, die Eingangstürinformationen enthalten, die eine Türöffnungsseite des Fahrzeugs angeben,
**dadurch gekennzeichnet, dass**
der Monitor (40) Zuschnittsrahmeninformationen gewinnt, bei denen es sich um Informationen handelt, die für jede der Kameras (20-27) festgelegt sind, um durch Zuschneiden des von der Kamera aufgenommenen Videos ein zugeschnittenes Video zu gewinnen, und
der Monitor (40) Informationen über die Korrelation zwischen Videos von entsprechend den Eingangstürinformationen gewählten Kameras und Abschnitten hält, in die ein auf dem Monitor (40) angezeigtes Video unterteilt ist und die jeweils für ein zugeschnittenes Video bestimmt sind, dass aufgrund der Zuschnittsrahmeninformationen aus dem von der entsprechenden Kamera aufgenommenen Video gewonnen ist, und somit die zugeschnittenen Videos der Kameras in Zuordnung zu der Türöffnungsseite in den genannten Abschnitten (60-0 - 60-7) anzeigt.

7. Überwachungsverfahren nach Anspruch 6, wobei
die Betriebsinformationen eine Fahrgeschwindigkeit des Schienenfahrzeugs angebende Geschwindigkeitsinformationen und die Eingangstürinformationen enthalten;
der Monitor das Video der Kamera anzeigt, wenn die Fahrgeschwindigkeit niedriger als ein vorbestimmter Wert ist und die Tür offen ist; und
der Monitor die Anzeige des Videos anhält, wenn die Fahrgeschwindigkeit gleich oder größer als der vorbestimmte Wert ist oder die Tür geschlossen ist.

8. Überwachungsverfahren nach Anspruch 6 oder 7, wobei:
der Server (50) die Zuschnittsrahmeninformationen für die entsprechenden Kameras (20-27) aufzeichnet;
der Server die Zuschnittsrahmeninformationen und Kamerainformationen bezüglich des Videos der Kamera zur Anzeige auf dem Monitor übermittelt, wenn die Betriebsinformationen einer bestimmten Bedingung unterliegen;
der Monitor (40) zuvor festgelegte Zuschnittsrahmeninformationen aufgrund der empfangenen Zuschnittsrahmeninformationen aktualisiert und die Videos von den entsprechenden Kameras entsprechend den empfangenen Kamerainformationen gewinnt; und
die Videos jeweils entsprechend den aktualisierten Zuschnittsrahmeninformationen zugeschnitten werden, um die zugeschnittenen Videos in unterteilten Bildschirmen anzuzeigen.

9. Überwachungsverfahren nach einem der Ansprüche 6 bis 8, wobei ein Rekorder (51) die Videos von den Kameras (20-27) und die Zuschnittsrahinformationen aufzeichnet und der Monitor die Zuschnittsrahmeninformationen durch Anforderung bei dem Rekorder gewinnt.

10. Überwachungsverfahren nach einem der Ansprüche 6 bis 9, wobei der Server (50) bei Empfang von zusätzlichen Kopplungsinformationen von dem Host-Server (52) mit einem Server des zusätzlich gekoppelten Schienenfahrzeugs kommuniziert, so dass der als Hauptserver festgelegte Server Zuschnittsrahmeninformationen von einem Unterserver gewinnt, um die Zuschnittsrahmeninformationen des zugeordneten Fahrzeugs zu aktualisieren, und so dass die aktualisierten Zuschnittsrahmeninformationen zum Monitor übermittelt werden.

## Revendications

1. Système de surveillance installé dans un véhicule de chemin de fer, ayant un serveur (50), un moniteur (40), une pluralité de caméras (20∼27) disposées sur un véhicule constituant le véhicule de chemin de fer en des positions qui assurent la capture de vidéos de zones autour de portes d'entrée du véhicule, et un commutateur de couche (44∼47) connectés les uns avec les autres par l'intermédiaire d'un réseau (53),
dans lequel le serveur est adapté à recevoir des informations opérationnelles,
les informations opérationnelles reçues par le serveur (50) depuis un serveur hôte (52) contiennent des informations de portes d'entrée identifiant un côté d'ouverture de porte du véhicule,
**caractérisé en ce que**
le moniteur (40) est adapté à acquérir des informations de cadre de rognage qui sont des informations ayant été définies pour chacune des caméras (20∼27) pour obtenir une vidéo rognée par rognage de la vidéo capturée par la caméra, et
le moniteur (40) contient des informations sur la corrélation entre des vidéos de caméras choisies en fonction des informations de portes d'entrée et de sections en lesquelles une vidéo devant être affichée sur le moniteur (40) est divisée et qui sont chacune pour une vidéo rognée obtenue à partir de la vidéo capturée par la caméra respective sur la base des informations de cadre de rognage, de telle sorte que les vidéos rognées des caméras en association avec le côté d'ouverture de porte sont affichées dans lesdites sections (60-0 - 60-7) sur le moniteur.

2. Système de surveillance selon la revendication 1, dans lequel :
les informations opérationnelles incluent des informations de vitesse indiquant une vitesse de déplacement du véhicule de chemin de fer, et les informations de portes d'entrée ;
dans le cas où la vitesse de déplacement est inférieure à une valeur prédéterminée, et où la porte est ouverte, le moniteur affiche la vidéo des caméras ; et
dans le cas où la vitesse de déplacement est égale ou supérieure à la valeur prédéterminée, ou où la porte est fermée, le moniteur cesse d'afficher la vidéo.

3. Système de surveillance selon la revendication 1 ou 2, dans lequel :
le serveur (50) enregistre les informations de cadre de rognage pour les caméras (20∼27) respectives ;
dans le cas où les informations opérationnelles sont en-dessous d'une condition prédéterminée, le serveur transmet les informations de cadre de rognage et des informations de caméra pour ce qui concerne la vidéo de la caméra pour affichage sur le moniteur ;
le moniteur (40) met à jour des informations de cadre de rognage précédemment définies sur la base des informations de cadre de rognage reçues, et acquiert les vidéos des caméras respectives en fonction des informations de caméra reçues ; et
chacune des vidéos est rognée en fonction des informations de cadre de rognage mises à jour pour affichage des vidéos rognées sur les écrans divisés.

4. Système de surveillance selon l'une quelconque des revendications 1 à 3, comprenant en outre un enregistreur (51) pour enregistrer les vidéos provenant des caméras (20∼27), dans lequel l'enregistreur est adapté à enregistrer en outre les informations de cadre de rognage et le moniteur est adapté à acquérir les informations de cadre de rognage en les demandant à l'enregistreur.

5. Système de surveillance selon l'une quelconque des revendications 1 à 4, dans lequel, à la réception d'informations de couplage additionnel depuis le serveur hôte (52), le serveur (50) communique avec un serveur du véhicule de chemin de fer additionnellement couplé de telle sorte que le serveur défini comme un serveur principal acquiert les informations de cadre de rognage depuis un sous-serveur pour mettre à jour les informations de cadre de rognage du véhicule associé, et les informations de cadre de rognage mises à jour sont transmises au moniteur.

6. Procédé de surveillance pour un système de surveillance installé dans un véhicule de chemin de fer et ayant un serveur (50), un moniteur (40), une pluralité de caméras (20∼27) disposées sur un véhicule constituant le véhicule de chemin de fer en des positions qui assurent la capture de vidéos de zones autour de portes d'entrée du véhicule, et un commutateur de couche (44∼47) connectés les uns avec les autres par l'intermédiaire d'un réseau (53),
dans lequel le serveur reçoit des informations opérationnelles depuis un serveur hôte (52), lesquelles informations opérationnelles contiennent des informations de portes d'entrée identifiant un côté d'ouverture de porte du véhicule,
**caractérisé en ce que**
le moniteur (40) acquiert des informations de cadre de rognage qui sont des informations ayant été définies pour chacune des caméras (20∼27) pour obtenir une vidéo rognée par rognage de la vidéo capturée par la caméra, et
le moniteur (40) contient des informations sur la corrélation entre des vidéos de caméras choisies en fonction des informations de portes d'entrée et de sections en lesquelles une vidéo affichée sur le moniteur (40) est divisée et qui sont chacune pour une vidéo rognée obtenue à partir de la vidéo capturée par la caméra respective sur la base des informations de cadre de rognage, et ainsi affiche dans lesdites sections (60-0 ∼ 60-7) les vidéos rognées des caméras en association avec le côté d'ouverture de porte.

7. Procédé de surveillance selon la revendication 6, dans lequel :
les informations opérationnelles incluent des informations de vitesse indiquant une vitesse de déplacement du véhicule de chemin de fer, et les informations de portes d'entrée ;
dans le cas où la vitesse de déplacement est inférieure à une valeur prédéterminée, et où la porte est ouverte, le moniteur affiche la vidéo de la caméra ; et
dans le cas où la vitesse de déplacement est égale ou supérieure à la valeur prédéterminée, ou où la porte est fermée, le moniteur cesse d'afficher la vidéo.

8. Procédé de surveillance selon la revendication 6 ou 7, dans lequel :
le serveur (50) enregistre les informations de cadre de rognage pour les caméras (20∼27) respectives ;
dans le cas où les informations opérationnelles sont en-dessous d'une condition prédéterminée, le serveur transmet les informations de cadre de rognage et des informations de caméra pour ce qui concerne la vidéo de la caméra pour affichage sur le moniteur ;
le moniteur (40) met à jour des informations de cadre de rognage précédemment définies sur la base des informations de cadre de rognage reçues, et acquiert les vidéos des caméras respectives en fonction des informations de caméra reçues ; et
chacune des vidéos est rognée en fonction des informations de cadre de rognage mises à jour pour affichage des vidéos rognées sur des écrans divisés.

9. Procédé de surveillance selon l'une quelconque des revendications 6 à 8, dans lequel un enregistreur (51) enregistre les vidéos provenant des caméras (20∼27) et les informations de cadre de rognage, et le moniteur acquiert les informations de cadre de rognage en les demandant à l'enregistreur.

10. Procédé de surveillance selon l'une quelconque des revendications 6 à 9, dans lequel, à la réception d'informations de couplage additionnel depuis le serveur hôte (52), le serveur (50) communique avec un serveur du véhicule de chemin de fer additionnellement couplé de telle sorte que le serveur défini comme un serveur principal acquiert les informations de cadre de rognage depuis un sous-serveur pour mettre à jour les informations de cadre de rognage du véhicule associé, et les informations de cadre de rognage mises à jour sont transmises au moniteur.
